# EUROPÄISCHE PATENTSCHRIFT

(11) **EP 3 022 610 B1**
(45) Veröffentlichungstag und Bekanntmachung des Hinweises auf die Patenterteilung: **08.05.2019**
(21) Anmeldenummer: 14749730.9
(22) Anmeldetag: 14.07.2014
(51) Int. Cl.: G05B 13/02, G06N 7/00

(54) **VERFAHREN UND VORRICHTUNG ZUR VERHALTENSSTEUERUNG VON SYSTEMEN**
METHOD AND DEVICE FOR CONTROLLING THE BEHAVIOR OF SYSTEMS
PROCÉDÉ ET DISPOSITIF DE COMMANDE DU COMPORTEMENT DE SYSTÈMES

(30) Priorität: 15.07.2013 DE 102013213829
(43) Veröffentlichungstag der Anmeldung: 25.05.2016
(73) Patentinhaber: Fraunhofer Gesellschaft zur Förderung der angewandten Forschung E.V., 80686 München (DE); Brandenburgische Technische Universität Cottbus, 03046 Cottbus (DE)
(72) Erfinder: WOLFF, Matthias, 02826 Görlitz (DE); RÖMER, Ronald, 03103 Neupetershain (DE); TSCHÖPE, Constanze, 01558 Grossenhain (DE); HENTSCHEL, Dieter, 01109 Dresden (DE)
(74) Vertreter: Stöckeler, Ferdinand
(86) Internationale Anmeldenummer: PCT/EP2014/065018
(87) Internationale Veröffentlichungsnummer: WO 2015/007678

(56) Entgegenhaltungen:
- PAUL E RYBSKI ET AL: "Prioritized Multihypothesis Tracking by a Robot with Limited Sensing", EURASIP JOURNAL ON ADVANCES IN SIGNAL PROCESSING, Bd. 27, Nr. 1, 1. Januar 2009 (2009-01-01) , Seite 67, XP055174864, ISSN: 1687-6180, DOI: 10.1007/s10514-005-5557-2
- JOSÉ M SIMÕES MOITA ET AL: "Active control of adaptive laminated structures with bonded piezoelectric sensors and actuators", COMPUTERS & STRUCTURES, Bd. 82, Nr. 17-19, 1. Juli 2004 (2004-07-01), Seiten 1349-1358, XP055174868, ISSN: 0045-7949, DOI: 10.1016/j.compstruc.2004.03.030
- Bjorn Carlson ET AL: "Controlling Agents in Smart Matter with Global Constraints", AAAI Technical Report WS-97-05, 1. Januar 1997 (1997-01-01), Seiten 58-63, XP055174871, Gefunden im Internet: URL:http://www.aaai.org/Papers/Workshops/1 997/WS-97-05/WS97-05-010.pdf [gefunden am 2015-03-09]
- XIAOLIANG ZHAO ET AL: "Active health monitoring of an aircraft wing with embedded piezoelectric sensor/actuator network: I. Defect detection, localization and growth monitoring", SMART MATERIALS AND STRUCTURES, IOP PUBLISHING LTD., BRISTOL, GB, Bd. 16, Nr. 4, 1. August 2007 (2007-08-01) , Seiten 1208-1217, XP020120524, ISSN: 0964-1726, DOI: 10.1088/0964-1726/16/4/032
- Lutz Frommberger ET AL: "From Smart Materials to Cognitive Materials - Requirements and Challenges", Journal of Biological Physics and Chemistry, 1. Januar 2009 (2009-01-01), Seiten 143-148, XP055174904, Gefunden im Internet: URL:http://cosy.informatik.uni-bremen.de/s ites/default/files/u11/CognitiveMaterials. pdf [gefunden am 2015-03-09] in der Anmeldung erwähnt
- DUBRAWSKI A ET AL: "LEARNING LOCOMOTION REFLEXES: A SELF-SUPERVISED NEURAL SYSTEM FOR AMOBILE ROBOT", ROBOTICS AND AUTONOMOUS SYSTEMS, ELSEVIER SCIENCE PUBLISHERS, AMSTERDAM, NL, Bd. 12, Nr. 3/04, 1. April 1994 (1994-04-01), Seiten 133-141, XP000443768, ISSN: 0921-8890, DOI: 10.1016/0921-8890(94)90020-5

## Beschreibung

Die Erfindung bezieht sich auf ein Verfahren, bei dem ein Ausgangssignal basierend auf einer Strategie bereitgestellt wird, wobei das Ausgangssignal auf einem aggregierten Informationsstatus früherer Eingangssignale basiert und der Informationsstatus und das Ausgangssignal auf einer Semantik eines Semantikmodells basieren.

Es existieren derzeit keine Materialien, die selbsttätig oder in Verbindung mit einem Steuerrechner zielgerichtet auf veränderte Umgebungsbedingungen, Belastung oder Beschädigung reagieren können, also zu einem kontrollierten Verhalten fähig sind. Auch gibt es keine Materialien, die selbsttätig oder in Verbindung mit einem Steuerrechner ein optimales Verhalten erlernen können. Der Begriff kognitives Material wurde von Frommberger in der Veröffentlichung "From Smart Materials to Cognitive Materials - Requirements and Challenges" geprägt, allerdings ohne die genannten technischen Probleme zu berücksichtigen, dass Materialien auf veränderte Umgebungsbedingungen, Belastung oder Beschädigung zielgerichtet reagieren können oder ein solches optimales Verhalten erlernen können. Es wird auch kein Vorschlag für eine technische Umsetzung angegeben. Für die Problemstellung existieren Teillösungen in Form von Smart Materials, Materialien mit eingebetteten Sensoren, Adaptronik oder Aktuatorik. Smart Materials zeigen ein reflexartiges Verhalten. Die Eigenschaften mancher Smart Materials können durch Beeinflussung von außen verändert werden, jedoch liegt dort kein zielgerichtetes Verhalten vor. Materialien mit eingebetteten Sensoren können auf einen eintreffenden Stimulus nicht reagieren, da sie keine Aktuatoren zur Beeinflussung des Materials umfassen. Auch die Adaptronik zeigt kein zielgerichtetes Verhalten. Aktuatorik wird lediglich von außen gesteuert, jedoch kann die Aktuatorik die eigenen Aktionen nicht definieren, da die Aktuatorik keine eigene Sensorik im zu beeinflussenden Material umfasst.

Aus der Biologie sind in kognitiven Systemen grundsätzlich drei Typen von Perzeptions-Aktions-Abläufen bekannt, die sich auf technische Systeme übertragen lassen: Intrinsische Abläufe, autonome Abläufe und durch externe kognitive Steuerung ausgelöste Aktionen. Bei intrinsischen Abläufen handelt es sich um Reflexe ohne Informationsverarbeitung. In technische Dimensionen umgesetzt bedeutet dies sich unmittelbar ändernde Materialeigenschaften, z. B. erfolgt eine Verhärtung bei einem Schlag auf das Material. Autonome Abläufe bezeichnen Reflexe mit Informationsverarbeitung, das bedeutet, im Material durch Sensorik und Elektronik ausgelöste Aktionen. Eine durch eine externe kognitive Steuerung ausgelöste Aktion bedeutet eine zielgerichtete Reaktion, die nicht auf das Material begrenzt sein muss. Sie ist in biologischen Systemen durch das zentrale Nervensystem initiiert, in technischen Systemen durch die Steuerung des Gesamtsystems.

Intrinsische Abläufe können durch Smart Materials realisiert werden. Autonome Abläufe und durch eine externe kognitive Steuerung ausgelöste Aktionen, welche jeweils zielgerichtetes Verhalten auslösen, sind bisher technisch nicht realisiert. Durch die Einbindung von autonomen Abläufen und von externen kognitiv ausgelösten Aktionen in Materialien und Konstruktionselementen können völlig neue Eigenschaften erzielt und eine Vielzahl von neuen Anwendungsfeldern erschlossen werden.

Zwischen intelligenten und kognitiven Materialien bestehen Unterschiede. Materialien, die als intelligent bezeichnet werden, können mit geeigneten Antworten auf einen äußeren Stimulus reagieren, wobei die geeigneten Antworten von einem externen Beobachter einprogrammiert oder in einer Lernphase anhand ausgewählter Trainingsdaten eines Trainers ermittelt wurden. Dabei hat allerdings nur der Beobachter oder der Trainer die zugrundeliegenden Verhaltensorganisation verstanden, das Material im Sinne eines intelligenten Systems jedoch nicht. Im biologischen Kontext bezeichnet man ein solches erbkoordiniertes Verhalten als einen Reflex.

Kognitive Materialien enthalten dagegen ein zusätzliches Modul, welches über folgende Eigenschaften verfügt: es versteht die Bedeutung von Umgebungssituationen, es kennt erreichbare Ziele bzw. Endsituationen, es verfügt über eine Menge bzw. eine Auswahl von ausführbaren Handlungen, es verfügt über ein inneres Modell seiner Umgebung, es kennt den eigenen Zustand, es verfügt über einen Antrieb zur Adaption des eigenen Zustandes, es verfügt über einen Mechanismus, mit dem der Adaptionsantrieb abgeschaltet werden kann, beispielsweise im Erfolgsfall der Handlung, wenn die aktuelle Situation der Endsituation entspricht und es ist autonom lernfähig.

Mit einem solchen kognitiven System sind zielgerichtete Handlungen in einer sich verändernden Umgebung möglich.

In "Prioritized Multihypothesis Tracking by a Robot with Limited Sensing" (Paul E Rybski et al, EURASIP JOURNAL ON ADVANCES IN SIGNAL PROCESSING, Bd. 27, Nr. 1, 1. Januar 2009), Seite 67, XP055174864, ISSN: 1687-6180, DOI: 10.1007/d10514-005-5557-2) ist ein Verfahren zum Objektverfolgen beschrieben, das mehrere Hypothesen generiert und unterhält, die Zustandsschätzungen aufweist, die mittels individueller Informationsquellen erzeugt werden.

In Active control of adaptive laminated structures with bonded piezoelectric sensors and actuators (JOSE M SIMÖNES MOITA ET AL, COMPUTERS & STRUCTURES, Bd. 82, Nr. 17-19, 01. Juli 2004, Seiten 1349-1358, XP055174868, IISN: 0045-7949, DOI: 10.1016/j.comptruc.2004.03.030) ist ein Ansatz zur Vibrationskontrolle unter Einsatz einer Finite-Elemente-Methode beschrieben.

Die Aufgabe der Erfindung besteht darin, ein verbessertes Konzept zum Ansteuern von Aktuatoren zu schaffen.

Diese Aufgabe wird durch eine Vorrichtung gemäß Anspruch 1, ein System gemäß Anspruch 14 und ein Verfahren gemäß Anspruch 15 gelöst.

Ausführungsbeispiele schaffen eine Vorrichtung zum Ansteuern von Aktuatoren eines Systems, das die Aktuatoren und Sensoren aufweist, mit folgenden Merkmalen:
einem Analysator zum Analysieren von Sensorausgangssignalen der Sensoren, um ein Analyseergebnis zu erhalten;
einem Interpretierer zum Interpretieren des Analyseergebnisses, um aus dem Analyseergebnis eine Mehrzahl von verschiedenen Interpretationshypothesen zu erhalten, die verschiedene Bedeutungen des Analyseergebnisses darstellen, wobei der Interpretierer ein Petrinetz aufweist, wobei jede Interpretationshypothese eine Menge möglicher Pfade durch das Petrinetz ist und eine Kombination von Wahrscheinlichkeiten oder Konfidenzen aufweist;
einer Verhaltenssteuerung zum Liefern einer eine Bedeutung aufweisenden Reaktion für eine angestrebte Beeinflussung des Systems auf die Mehrzahl von verschiedenen Interpretationshypothesen, wobei die Bedeutung ein Endpunkt eines Pfades durch das Petrinetz ist;
einem Artikulierer zum Erzeugen einer Artikulation aus der Bedeutung der Reaktion, wobei die Artikulation eine Zeichenfolge umfasst und wobei aus der Artikulation durch Synthese Ansteuersignale für die Aktuatoren erzeugbar sind; und
einem Synthetisierer zum Synthetisieren der Ansteuersignale für die Aktuatoren aus der Artikulation und zum Ausgeben der synthetisierten Ansteuersignale an die Aktuatoren;
wobei der Interpretierer ausgebildet ist, um die Mehrzahl von verschiedenen Interpretationshypothesen zu starten und um die gestarteten Interpretationshypothesen unter Verwendung der Konfidenzen oder der Wahrscheinlichkeiten fortzuführen, wobei die Konfidenzen und die Wahrscheinlichkeiten durch einen vorgegebenen Anfangszustand des Systems oder eine Systemvergangenheit definiert sind; und
wobei ein erster Pfad und ein unterschiedlicher zweiter Pfad durch das Petrinetz einen gleichen Endpunkt aufweisen.

Die vorliegende Erfindung basiert auf der Erkenntnis, dass in einem technischen System durch Liefern einer Reaktion durch Starten und Fortführen von Interpretationshypothesen das System auf seinen Zustand reagieren kann, wodurch eine optimale Reaktion bei veränderten Zuständen durch ein Auswerten von Interpretationshypothesen gefunden werden kann, wobei Interpretationshypothesen durch Wahrscheinlichkeiten und Konfidenzen abgeleitet werden, die den Systemzustand abbilden.

Vorteilhaft an Ausführungsbeispielen dieser Erfindung ist, dass die Interpretation von Sensorsignalen des Systems nichtsequenziell erfolgen kann. Das bedeutet, dass eine nichtsequenzielle semantische Interpretation der analysierten Sensorsignale zur Bestimmung der Systemreaktion genutzt werden kann. Die Systemreaktion kann unter Berücksichtigung einer Bedeutung über Aktuatoren im System umgesetzt werden.

Ferner vorteilhaft ist, dass das erfindungsgemäße Konzept eine Möglichkeit schafft, selbstreagierende Struktursysteme zu schaffen, die erfassten Sensorsignale semantisch interpretieren und Verhaltensstrategien bezüglich eines angestrebten Strukturzustandes ableiten.

Gemäß einem Ausführungsbeispiel werden Sensorsignale von einem Analysator analysiert und einer Mustererkennung unterzogen, um die Signale in Zeichenfolgen umzusetzen. Die Zeichenfolgen werden durch einen Äußerungs-Bedeutungs-Umsetzer eines Interpretierers in eine nichtsequenzielle Repräsentation einer Semantik der Zeichenfolge überführt und einer Verhaltenssteuerung als Eingangssignal in Form einer Mehrzahl von Bedeutungen von Interpretationshypothesen zur Verfügung gestellt. Die Verhaltenssteuerung ist ausgebildet, um eine Reaktion auf die Mehrzahl von verschiedenen Interpretationshypothesen zu liefern und die Reaktion einem Artikulierer zur Verfügung zu stellen. Der Artikulierer weist einen Bedeutungs-Äußerungs-Umsetzer auf, so dass infolge einer eingegebenen Reaktion mit einer Bedeutung eine Artikulationshypothese, eine Äußerung, aus dem Umsetzer ausgegeben, in eine Zeichenfolge umgesetzt wird und in Form von Eingangssignalen für einen Synthetisierer bereitgestellt wird. Der Synthetisierer ist ausgebildet, um aus den Eingangssignalen Ansteuersignale für Aktuatoren zu erzeugen, wobei eine Betätigung der Aktuatoren mit den Aktuatorsignalen von zumindest einem der Sensoren festgestellt wird.

Ausführungsbeispiele umfassen einen Informationsstatusspeicher, der ausgebildet ist, um einen Informationsstatus basierend auf vorangegangenen Zuständen des Systems bzw. einen aktuellen Zustand des Systems zu speichern. Dabei ist der Informationsstatusspeicher ausgebildet, um Interpretationshypothesen aus vorangegangenen Schritten zu aggregieren, um einen Informationsstatus zu erhalten. Dies erlaubt der Verhaltenssteuerung, vorangegangene Interpretationen und Reaktionen zu bewerten und zukünftige Interpretationen und Reaktionen anzupassen, um so durch einen Lernprozessor und einen Strategieprozessor das Verhalten des Systems in zukünftigen Schritten zu beeinflussen.

Diese Ausführungsform erlaubt eine dynamische Anpassung des Systemverhaltens. Das Systemverhalten kann teilweise durch Aktuatoranregungen der Struktur als Reaktion auf Strukturanregungen, die von den Sensoren erfasst werden, ausgeführt sein. Durch eine Analyse einer Bedeutung detektierter Sensorsignale und deren Muster kann die Vorrichtung auch auf Ereignisse reagieren, die vorab unbekannt waren. Alternativ oder zusätzlich kann die Vorrichtung das Systemverhalten durch eine Anpassung von Reaktionswahrscheinlichkeiten an eine aktuelle Situation anpassen.

Weitere vorteilhafte Ausführungsformen sind Gegenstand der abhängigen Patentansprüche.

Ausführungsbeispiele der Erfindung werden nachfolgend näher erläutert. In den Figuren sind gleiche oder gleichwirkende Elemente mit den gleichen Bezugszeichen versehen. Bevorzugte Ausführungsbeispiele der vorliegenden Erfindung werden nachfolgend Bezug nehmend auf die beiliegenden Zeichnungen erläutert. Es zeigen:
- Fig. 1: eine Vorrichtung zur Informationsverarbeitung und Verhaltenssteuerung von kognitiven Materialien;
- Fig. 2: einen ersten Schritt einer Verhaltenssteuerung;
- Fig. 3: einen auf den ersten Schritt folgenden zweiten Schritt der Verhaltenssteuerung;
- Fig. 4: einen auf den zweiten Schritt folgenden dritten Schritt der Verhaltenssteuerung;
- Fig. 5: eine schematische Darstellung einer Anordnung von Sensoren und Aktuatoren an einem System, z. B. mit einem kognitiven Material;
- Fig. 6: eine schematische Darstellung der Vorrichtung aus Fig. 1, bei der Komponenten zu einem kompakteren System zur Informationsverarbeitung und Verhaltenssteuerung für kognitive Materialien in einem Perzeptions-Aktions-Zyklus zusammengefasst sind.

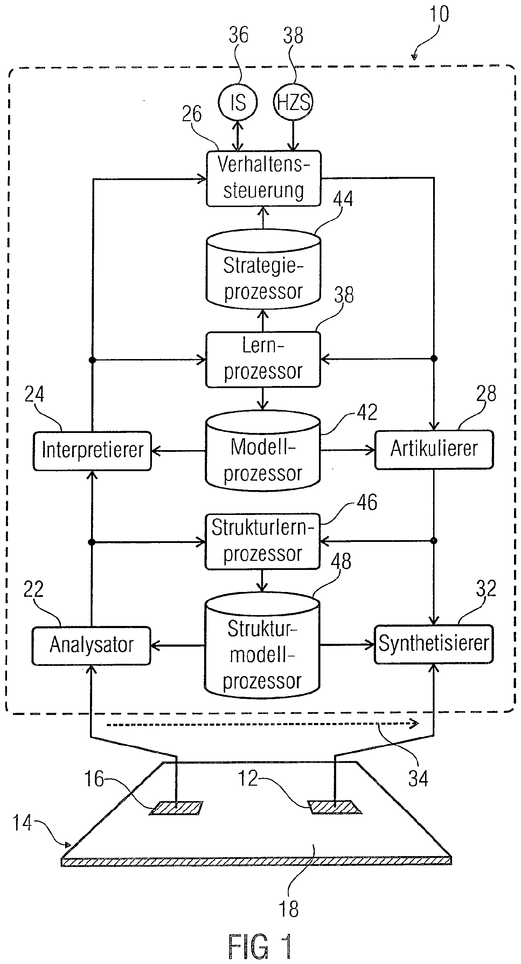

Fig. 1 zeigt eine Vorrichtung 10 zur Informationsverarbeitung und Verhaltenssteuerung von Systemen, wie z. B. kognitiven Materialien. Vorrichtung 10 ist ausgebildet, um Aktuatoren 12 eines Systems 14, das die Aktuatoren 12 und Sensoren 16 aufweist, anzusteuern. Das System 14 kann beispielsweise eine Flugzeugstruktur, die Karosserie eines Automobils oder eines Windkraftrotorblattes umfassen. Das System 14 umfasst ein kognitives Material 18 als Teile einer Struktur, an oder in welchem die Sensoren 16 und/oder Aktuatoren 12 angebracht sind. Die Sensoren 16 liefern Sensorsignale, die Informationen über den Material- oder Strukturzustand, beispielsweise eine Verformung, eine Beschädigung, eine Belastung oder Umwelteinflüsse, wie Temperatur, beinhalten. Die Aktuatoren 12 sind ausgebildet, um über Aktuatorsignale angesteuert bzw. betätigt zu werden und basierend auf der Aktuatorbetätigung den Materialzustand zu beeinflussen. Eine Betätigung der Aktuatoren 12 führt dabei zu einem erfassbaren Signal der Sensoren 16 bzw. zumindest eines Sensors 16 oder zu einer Änderung von Materialeigenschaften des kognitiven Materials (z. B. Anspannung). Die Aktuatoren 12 und die Sensoren 16 können dabei jeweils als eine Vielzahl von Elementen an oder in dem kognitiven Material 18 angeordnet sein, um das System 14 großflächig zu überwachen und ebenfalls großflächig mit Aktuatoren 12 zu beeinflussen, beispielsweise um verschiedene Schwingungsmoden des Systems 14 zu erfassen oder anzuregen. Die Vorrichtung 10 umfasst einen Analysator 22, der ausgebildet ist, um die Sensorsignale der Sensoren 16 zu empfangen und die Sensorsignale mittels einer Mustererkennung in Zeichenfolgen umzusetzen. Die Mustererkennung kann beispielsweise ähnlich aufgebaut sein wie eine für Spracherkennung oder eine für die Erkennung akustischer Muster geeignete Mustererkennung. Der Analysator 22 ist ferner ausgebildet, um ein Analyseergebnis zu liefern, das die Zeichenfolgen umfasst.

Vorrichtung 10 umfasst ferner einen Interpretierer 24 zum Interpretieren des Analyseergebnisses, um aus dem Analyseergebnis verschiedene Interpretationshypothesen zu erhalten, die Bedeutungen des interpretierten Analyseergebnisses darstellen. Eine Verhaltenssteuerung 26 der Vorrichtung 10 ist ausgebildet, um basierend auf den Interpretationshypothesen eine Reaktion, das bedeutet eine angestrebte Beeinflussung des Systems 14, zu liefern und diese einem Artikulierer 28 zur Verfügung zu stellen. Der Artikulierer 28 ist ausgebildet, um basierend auf der zur Verfügung gestellten Reaktion mehrere Artikulationshypothesen zu starten und fortzuführen, eine Artikulation bspw. in Form einer Zeichenfolge aus der Artikulationshypothese mit der größten Wahrscheinlichkeit oder der größten Konfidenz zu erzeugen und diese Artikulation einem Synthetisierer 32 zur Verfügung zu stellen. Der Synthetisierer 32 der Vorrichtung 10 ist ausgebildet, um die bereitgestellte Artikulation in Aktuatorsignale zum Ansteuern der Aktuatoren 12 zu überführen und mit diesen die Aktuatoren 12 zu betätigen. In anderen Worten übersetzt der Synthetisierer eine gewichtete Mehrzahl von Zeichenketten, beispielsweise dargestellt als gewichteter endlicher Automat, welche das/die Aktuatorsignal(e) repräsentiert, in das/die adäquaten Aktuatorsignal(e).

Durch das Erfassen der Sensorsignale und die Auswertung und Weiterverarbeitung der Sensorsignale durch den Analysator 22, den Interpretierer 24, die Verhaltenssteuerung 26, den Artikulierer 28 und den Synthetisierer 32 sowie die Aktuatoren 12 ist aufgrund der Sensierbarkeit einer Aktuatorbetätigung durch die Sensoren 16 ein geschlossener Reaktionskreis realisierbar. In Abgrenzung zu einem reflexhaften System, wie es beispielsweise durch sogenannte Smart Materials umgesetzt werden kann, erlaubt Vorrichtung 10, die Struktur 14 einer veränderlichen und optimierbaren Strategie folgend zu beeinflussen. Im Gegensatz dazu sind Smart Materials ausgebildet, um beispielsweise bei Verformung durch äußere Einflüsse ein direkt vom Material abhängiges Verhalten, beispielsweise einen mechanischen Widerstand oder ein elektrisches Signal, zu zeigen und mithin zu reagieren, wobei die Reaktion von Aktuatorsignalen aus Sensorsignalen mit Smart Materials ohne eine Verhaltenssteuerung, d. h. lediglich direkt oder starr vorgegeben erfolgt, wie es durch den Pfeil 34 angedeutet ist. Smart Materials sind im Unterschied zu kognitiven Materialien in der Regel nur zu reflexartigen Reaktionen fähig.

Die Umsetzung von Zeichenfolgen in Signale in dem Synthetisierer 32 kann beispielsweise nach dem Funktionsprinzip einer Sprachsynthese, eines Musiksynthesizers oder eines Cognitive Radar realisiert werden und stellt ein Pendant zum Analysator 22 dar.

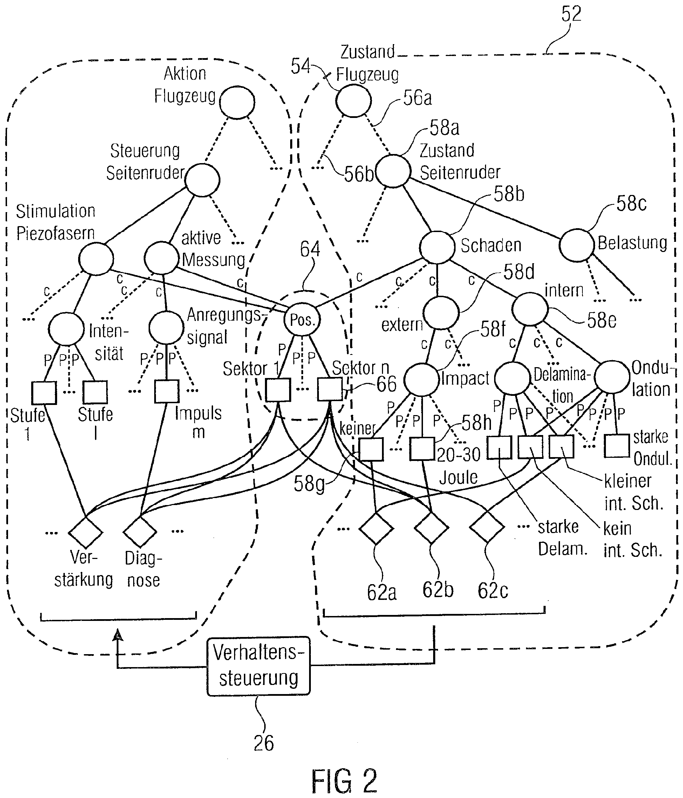

Die vom Analysator 22 bereitgestellten Zeichenfolgen werden vom Interpretierer 24 interpretiert. Der Interpretierer 24 weist hierfür ein Petrinetz auf, wie es in den Fig. 2-4 beispielhaft beschrieben ist. Die Interpretation umfasst das Starten mehrerer Interpretationshypothesen, die eine Berücksichtigung von Konfidenzen und Wahrscheinlichkeiten beinhalten, und ein Liefern der Bedeutungen der jeweiligen Interpretationshypothesen an die Verhaltenssteuerung 26. Vereinfacht ausgedrückt beschreibt eine Interpretationshypothese eine Mehrzahl von Annahmen nach dem Prinzip "Was könnte das jeweilige Muster der Sensorsignale bedeuten". Das Ergebnis ist eine Bedeutung der jeweiligen Interpretationshypothese mit einer Konfidenz oder einer Wahrscheinlichkeit. In anderen Worten ist die Interpretationshypothese eine Menge möglicher Pfade durch das Petrinetz und die Bedeutung ein Endpunkt des jeweiligen Pfades. Möglicherweise können zwei oder mehrere Interpretationshypothesen eine identische Bedeutung aufweisen, so dass eine nichtsequentielle Interpretation der Sensorsignale vorliegt und mithin eine nichtsequentielle Repräsentation der Semantik der jeweiligen Sensorsignalmuster. Unterschiedliche Interpretationsannahmen (Pfade durch das Petrinetz) können zu einem gleichen Ergebnis (Endpunkt des jeweiligen Pfades) führen. Der Interpretierer 24 weist einen Äußerungs-Bedeutungs-Umsetzer auf, der eine Umsetzung der vom Analysator 22 bereitgestellten Zeichenfolgen in eine nichtsequenzielle Repräsentation von Semantik, das bedeutet eine Bedeutung der Zeichenfolgen, ermöglicht. Beispiele für eine nichtsequenzielle Repräsentation einer Information kann beispielsweise ein Vergleich des Satzes "Gutes Wetter heute" mit dem Satz "Heute ist gutes Wetter" liefern. Sequenziell betrachtet sind beide Sätze voneinander verschieden. Eine nichtsequenzielle Betrachtung der Sätze und mithin eine Auswertung der Bedeutung der beiden Sätze ergibt diesbezüglich ein Analogon, welches aussagt, dass an dem aktuellen Tag gutes Wetter herrscht bzw. herrschte.). In anderen Worten realisiert der Äußerungs-Bedeutungs-Umsetzer den Interpretierer und übersetzt eine gewichtete Mehrzahl von Zeichenfolgen, beispielsweise dargestellt als gewichteter endlicher Automat, welche das/die Sensorsignal(e) repräsentiert, in eine gewichtete Mehrzahl von Merkmal-Werte-Relationen, beispielsweise dargestellt als gewichtetes Petrinetz, welche die Bedeutung des Sensorsignals repräsentiert.

Die Verhaltenssteuerung 26 ist ausgebildet, um die Interpretationshypothesen mit dem größten Konfidenzmaß oder der größten Wahrscheinlichkeit bzw. einer maximalen oder minimalen Kombination aus Wahrscheinlichkeiten oder Konfidenzen auszuwählen und daraus eine Reaktion des Systems zu bestimmen. Dafür wählt die Verhaltenssteuerung 26 einen Bedeutungsknoten mit einer entsprechenden Wahrscheinlichkeit oder Konfidenz aus. Die Verhaltenssteuerung 26 ist mit einem Informationsstatusspeicher 36 verbunden, der ausgebildet ist, um einen Informationsstatus des Systems 14 oder einen aktuellen Zustand des Systems 14 zu speichern. Der Informationsstatus kann dabei beispielsweise aus Interpretationshypothesen vergangener Zeitpunkte aggregiert werden, so dass der Informationsstatus die Systemhistorie mit berücksichtigt. Das bedeutet, dass beispielsweise bei einer durch eine Verformung der Struktur 14 ausgelösten Interpretation der Signale der Sensoren 16 die Verhaltenssteuerung 26 eine Reaktion bestimmt, die eine Anregung der Aktuatoren 12 bewirkt und die Anregung beispielsweise ein bekanntes Signalmuster umfasst. Die Reaktion des Materials 18 auf diese Anregung wird von den Sensoren 16 wiederum erfasst und durch den Analysator 22 und den Interpretierer 24 verarbeitet. Die Verhaltenssteuerung kann aufgrund des Informationsstatus, welcher im Informationsstatusspeicher 36 hinterlegt ist, für eine zukünftige Reaktion berücksichtigen, so dass eine Testanregung des Systems 14 bereits vorgenommen wurde. In anderen Worten ist der Informationsstatusspeicher 36 ist ausgebildet, um Artikulations- und Interpretationshypothesen aus vergangenen Schritten zu aggregieren, um den Informationsstatus zu erhalten.

Damit kann eine eventuelle weitere Reaktion von den Ergebnissen der gezielten Strukturanregung eines vorherigen Schrittes abhängig gemacht werden. Die Verhaltenssteuerung 26 ist ausgebildet, um Reaktionen basierend auf dem aktuellen Systemzustand und/oder einem vergangenen Systemzustand und/oder einer vom Interpretierer 24 gestarteten Interpretationshypothese zu bestimmen bzw. zu erzeugen.

Ein Handlungszielspeicher 38 ist mit der Verhaltenssteuerung 26 verbunden und ausgebildet, um Handlungsziele bereitzustellen und der Verhaltenssteuerung 26 zur Verfügung zu stellen. Ein mögliches Handlungsziel kann beispielsweise ein möglichst niedriges Vibrationsniveau des Materials 18 oder eine Minimierung von Fehlentscheidungen sein, insbesondere, wenn die Verhaltenssteuerung 26 Reaktionen bestimmt, welche sicherheitskritische Aspekte des Systems 14 betreffen, beispielsweise Reaktionen auf eine Materialschädigung eines Flugzeugrumpfes.

Die von dem Interpretierer 24 gestarteten Interpretationshypothesen können somit basierend auf dem Informationsstatus und dem Handlungsziel die von der Verhaltenssteuerung 26 bestimmte Reaktion beeinflussen, so dass durch den Interpretierer 24 die von der Verhaltenssteuerung 26 bestimmte Reaktion ggf. nicht vorab bestimmbar ist, da der Interpretierer lediglich mittelbare Kenntnis von der Strategie hat.

Ein Lernprozessor 38 der Vorrichtung 10 ist ausgebildet, um die Interpretationshypothesen des Interpretierers 24 sowie die von der Verhaltenssteuerung 26 ausgewählte Reaktion zu empfangen. Damit kann durch den Lernprozessor 38 ein Abgleich zwischen den Interpretationshypothesen und der gewählten Reaktion durchgeführt werden. Ein Strategieprozessor 44 ist ausgebildet, um der Verhaltenssteuerung 26 eine Strategie zum Bestimmen der jeweiligen Reaktion bereitzustellen. Der Lernprozessor 38 ist ausgebildet, um die Ergebnisse des Abgleichs zwischen den Interpretationshypothesen und der bestimmten Reaktion zu empfangen und dem Strategieprozessor bereitzustellen. Damit kann die Strategie der Verhaltenssteuerung 26 adaptiert und an veränderliche Anforderungen an das System 14 angepasst werden. Der Lernprozessor 38 ist ausgebildet, um einen Modellprozessor 42 und einen Strategieprozessor 44 zu steuern. Der Strategieprozessor 44 ist ausgebildet, um die Verhaltensteuerung 26 mit einer Verhaltensstrategie zu versorgen, die der Verhaltenssteuerung 26 eine Grundlage bieten kann, auf welcher Grundlage eine Reaktion aus den Interpretationshypothesen bestimmt wird.

Ausführungsbeispiele zeigen eine Strategie, die durch den Ausdruck "Erst eine genaue Messung durchführen und anschließend über weitere Reaktionen entscheiden" bestimmt ist. In einem weiteren Ausführungsbeispiel lautet eine Strategie "Bei möglichen Beschädigungen an sicherheitsrelevanten Bauteilen des Systems eine Strukturverstärkung einleiten und dem Bediener eine Stilllegung des Systems empfehlen".

Die Verhaltenssteuerung 26 kann möglicherweise als Optimierungsaufgabe einer Kostenfunktion dargestellt werden, so dass eine mögliche Verhaltensstrategie Möglichkeiten zur Minimierung der Kostenfunktion beschreibt. Ein vom Lernprozessor 38 umgesetztes automatisches Lernen der Strategie kann bspw. berücksichtigen, dass eine Zustandsmessung des Systems 14 nach einem Aufprall mit einer Energie von weniger als 5 Joule auf einen Teil A des Systems nie und einem Teil B oft zu Beschädigungen führt, so dass bei einem erneuten Auftreten des Aufprallereignisses in Teil B des Systems eine andere Reaktion wahrscheinlicher bestimmt wird als bei einem derartigen Ereignis in Teil A des Systems.

Der Modellprozessor 42 umfasst ein inneres Modell des Systems. Das innere Modell entspricht dabei einer "Karte", das bedeutet einem Abbild des Systems die jeder Situation eine Menge von bewerteten Handlungen zuordnet. Der Modellprozessor 42 ist ausgebildet, um den Interpretierer 24 und den Artikulierer 28 basierend auf den vom Lernprozessor 38 bereitgestellten Signalen anzupassen, das bedeutet, dass beispielsweise ein jeweiliges Petrinetz des Interpretierers 24 oder des Artikulierers 28 bzw. die Konfidenzmaße oder Wahrscheinlichkeiten der Petrinetze basierend auf dem Modellprozessor angepasst werden. Die Interpretationshypothesen können vom Lernprozessor 38 ausgewertet, an den Modellprozessor 42 weitergegeben und von dort als den Interpretierer anpassendes Signal an den Interpretierer 24 zurückgegeben werden. Damit bilden der Interpretierer 24, der Lernprozessor 38 und der Modellprozessor 42 einen Rückkopplungskreis. Eine Einbeziehung der von der Verhaltenssteuerung 26 ausgewählten Reaktion durch den Lernprozessor 38 führt dazu, dass ein erweiterter Rückkopplungskreis bezüglich des Interpretierers 24 gebildet ist, welcher auch die Strategie, welche die Verhaltenssteuerung beeinflusst, mit auf den Interpretierer 24 zurückkoppelt.

Weiterhin kann der Modellprozessor 42 den Artikulierer 28 beeinflussen, beispielsweise durch Anpassen von Wahrscheinlichkeiten oder Konfidenzen des Petrinetzes des Artikulierers 28. Ein im Informationsstatusspeicher 36 gespeicherter Informationsstatus, der die Verhaltensteuerung 26 beeinflusst, erlaubt dem Modellprozessor basierend auf dem Lernprozessor eine Anpassung des Artikulierers 28 dahin gehend, dass mit der Vorrichtung 10 eine autonome Überprüfung, ob die jeweils modellbasierten Interpretierer 24 und Artikulierer 28 Ereignisse korrekt interpretieren und Artikulationen korrekt bereitstellen.

Der Artikulierer ist ausgebildet, um eine Mehrzahl von Artikulationshypothesen zu starten und für jede der verschiedenen Artikulationshypothesen ein Konfidenzmaß zu liefern. Eine in den Artikulierer eingespeiste Bedeutung, eine Reaktion, führt zu einer Äußerung, einer Zeichenfolge, die aus dem Bedeutungs-Äußerungs-Umsetzer des Artikulierers ausgegeben wird, wobei die Artikulationshypothese mit dem größten Konfidenzmaß in den Bedeutungs-Äußerungs-Umsetzer eingegeben wird. Der Artikulierer 28 ist ferner ausgebildet, um ein Konfidenzmaß, das einer Artikulationshypothese zugeordnet ist, aus einer Kombination von Konfidenzmaßen oder Wahrscheinlichkeiten, denen die Kanten zwischen den Bedeutungsknoten und dem Wurzelknoten zugeordnet sind, zu berechnen. In anderen Worten realisiert der Bedeutungs-Äußerungs-Umsetzer den Artikulierer und übersetzt eine gewichtete Mehrzahl von Merkmal-Werte-Relationen, beispielsweise dargestellt als gewichtetes Petrinetz, welche die Bedeutung des Aktuatorsignals repräsentiert, in eine gewichtete Mehrzahl von Zeichenfolgen, beispielsweise dargestellt als gewichteter endlicher Automat, welche das/die Aktuatorsignal(e) repräsentiert.

Die anfänglichen Modelle des Interpretierers 24 und des Artikulierers 28 können dabei mithilfe von Methoden des maschinellen Lernens automatisch oder halbautomatisch erzeugt werden. Da Interpretierer 24 und Artikulierer 28 komplementäre Aufgabenfelder aufweisen und von dem gemeinsamen Modellprozessor 42 gesteuert werden, können der Interpretierer 24 und der Artikulierer 28 ein gemeinsames Modell verwenden. Der Lernprozessor 38 ist ausgebildet, um ein automatisches Lernverfahren im Sinne einer Anpassung der Modelle des Interpretierers 24 und des Artikulierers 28 durchzuführen, so dass diese Modelle nicht mehr manuell erstellt und aktualisiert werden müssen, sondern eine automatisierte Erzeugung und Aktualisierung erfolgen kann. Alternativ oder zusätzlich kann die automatisierte Erstellung und Aktualisierung eine Darstellung größerer Probleme bezüglich komplexerer Strukturen, umfangreicherer Sensornetzwerke oder Aktornetzwerke erfolgen.

Komplementär zur Umsetzung von Zeichenfolgen in eine nichtsequenzielle Repräsentation von Semantik ist der Artikulierer 28 ausgebildet, nichtsequenzielle Repräsentationen von Semantik, welche in Form von durch die Verhaltenssteuerung 26 ausgewählten Reaktionen an den Artikulierer 28 geliefert werden, in Zeichenfolgen umzusetzen, die von dem Synthetisierer 32 in Aktorsignale weiter verarbeitet werden können. Der Artikulierer 28 bzw. der Bedeutungs-Äußerungs-Umsetzer ist ausgebildet, um mehrere Artikulationshypothesen zu starten und eine Zeichenkette auszugeben. Durch die Auswahl von Reaktionen basierend auf der nichtsequentiellen Repräsentation von Semantik kann Vorrichtung 10 gegenüber einer reinen Auswertung von Sensorsignalen, bspw. bezüglich Amplitude oder Phase, einen erweiterten Informationsgehalt der Sensorsignale berücksichtigen. Die Auswahl einer Reaktion durch die Verhaltenssteuerung 26 kann beispielsweise mithilfe eines Markov-Decision-Process erfolgen.

In anderen Worten kann die nichtsequenzielle Repräsentation von Semantik (oder Bedeutung) als eine Menge gewichteter Merkmal-Werte-Relationen beschrieben und beispielsweise als Petrinetz dargestellt werden. Die Gewichte der Merkmal-Werte-Relationen sind in dem Petrinetz als Wahrscheinlichkeiten und Konfidenzen repräsentiert. Das Ausgangssignal des Interpretierers, das Eingangssignal des Artikulierers und der Informationsstatus sind jeweils eine Menge gewichteter Merkmal-Werte-Relationen.

Der Informationsstatus, der Lernprozessor 38, der Modellprozessor 42, der Interpretierer 24 und der Artikulierer 28 bilden mit der durch den Äußerungs-Bedeutungs-Umsetzer des Interpretierers 24 und den Bedeutungs-Äußerungs-Umsetzer des Artikulierers 28 eine Pragmatik. Unter Pragmatik kann die Wirkung einer eingehenden semantischen Repräsentation, also die Integration in den Informationsstatus und das Auslösen von Artikulationen, verstanden werden.

Die vom Analysator 22 gelieferten Zeichenketten und die vom Artikulierer 28 gelieferten Zeichenketten werden von einem Strukturlernprozessor 46 als Eingangssignale verarbeitet. Der Strukturlernprozessor 46 ist ausgebildet, um einen Strukturmodellprozessor 48 zu steuern. Der Strukturmodellprozessor 48 ist ausgebildet, um den Analysator 22 und den Synthetisierer 32 abhängig von den Eingangssignalen des Strukturlernprozessors 46 zu steuern. Der Analysator 22, der Strukturlernprozessor 46, der Synthetisierer 32 und der Strukturmodellprozessor 48 bilden einen Strukturregelkreis. Über einen Abgleich der Zeichenfolgen des Analysators 22 und des Artikulierers 28 ist durch den Strukturlernprozessor 46 ausgebildet, um den Strukturmodellprozessor 48 zu steuern, so dass eine Anpassung der Strukturmodelle des Analysators 22 und des Synthetisierers 32 erfolgt. Strukturelle Veränderungen, beispielsweise infolge einer Erwärmung oder einer Alterung, können durch angepasste Strukturmodelle kompensiert werden. Das bedeutet, dass der Strukturregelkreis ausgebildet ist, einen Abgleich durchzuführen, ob eine Ansteuerung der Aktuatoren 12 eine gewünschte Beeinflussung der Struktur 14 bewirkt, indem die Signale der Sensoren 16 ausgewertet werden und die Ergebnisse der Auswertung mit den Ausgangssignalen des Artikulierers 28 verglichen werden. Führt beispielsweise eine Erwärmung der Struktur 14 dazu, dass das kognitive Material 18 möglicherweise weicher wird und auf eine Anregung durch die Aktuatoren 12 mit einer geringeren Systemantwort antwortet, so wird dies durch die Sensoren 16 sensiert, das Modell des Synthetisierers 32 angepasst, was zu einer stärkeren Ansteuerung der Aktuatoren 12 führen kann.

Der Analysator 22 und der Synthetisierer 32 sind ausgebildet, um die gleichen Strukturmodelle zu verwenden. In alternativen Ausführungsbeispielen ist der Strukturmodellprozessor 48 ausgebildet, um getrennte Strukturmodelle für die jeweiligen Berechnungen zu verwenden. Die Umsetzung erfolgt basierend auf Modellen der Struktur 14. Die Modelle können mithilfe von Methoden des maschinellen Lernens automatisch oder halbautomatisch erzeugt werden.

Die Verhaltenssteuerung 26 ist ferner ausgebildet, um auf Signalebene und/oder auf einer Ebene aus dem Signal abgeleiteter Merkmale, beispielsweise einem Spektrum, einem Spektrogramm oder einem Skalogramm, oder auf einer Ebene semantisch interpretierter Zeichenfolgen zu arbeiten.

Das System mit dem kognitiven Material 18 umfasst einen kognitiven Kreis bzw. einen Perzeptions-Aktions-Zyklus. Die erfasste "Umwelt" (Perzeption) ist der Zustand des Materials 18 mit eingebetteten Sensoren und ggf. eingebetteten Aktuatoren, die Aktion (Reaktion) ist die bestimmte Systemreaktion der Verhaltenssteuerung 26.

Das automatische Lernen des Lernprozessors 38 und des Strukturlernprozessors 48 bzw. die Aufmerksamkeitssteuerung durch die Anpassung der Strategie umfasst eine Prioritätssteuerung bei sensorischem Overload, das bedeutet, dass beispielsweise sicherheitsrelevante Sektoren bevorzugt gegenüber komfortrelevanten Funktionen ausgewertet werden, eine automatische Anpassung der kognitiven Verarbeitung an unerwartete Änderungen der Umwelt oder des Materials, beispielsweise bei einer Detektion zuvor unbekannter Ereignisse und einem Erlernen einer optimalen Strategie zur Handlungsauswahl, insbesondere unter Berücksichtigung neuer und zuvor unbekannter Ereignisse.

Bei zusätzlichen äußeren Stimuli strebt ein kognitives System Endsituationen an, die ein Belohnungssignal zur Folge haben und mit dem ein Adaptionsantrieb auch wieder abgeschaltet werden kann. Einen Weg von einer Ausgangs- zu einer Endsituation ist durch eine Auswahl einer Reihe von Handlungen, beispielsweise durch eine Handlungsvorschrift oder eine Art Karte mit hinterlegten Handlungen, gegeben, welche bis zum Erreichen einer Endhandlung im Mittel die geringsten Kosten verursachen. Eine Strategie kann also beispielsweise durch die Lösung einer Optimierungsaufgabe definiert sein und zielgerichtete Handlungen zur Folge haben. Bei wechselnden Umgebungsbedingungen kann das System in der Lage sein zu kontrollieren, ob mit den gewählten Handlungen tatsächlich auch eine Endsituation erreicht wurde (ob es die gewünschte Endsituation ist), wenn diese Bedingung aufgrund veränderter Umgebungsbedingungen, beispielsweise Hindernisse, Alterungen oder Temperaturschwankungen, nicht eingetreten ist, kann das System autonom eine andere oder veränderte Strategie erlernen. Dazu kann es die Kosten der beispielsweise auf der Karte verzeichneten Handlungen neu justieren. Somit wird eine Handlungsorganisation basierend auf von außen vorgegebenen Verteilungen von Handlungskosten dahin gehend erweitert, dass diese durch autonomes Lernen neu justiert werden können und sich somit an eine sich ständig verändernde Umgebung anpassen können.

Beispielsweise kann ein Aktuator das Material der Struktur versteifen, um im Falle eines Zusammenstoßes zweier Automobile eine erhöhte Sicherheit durch eine versteifte Karosserie zu ermöglichen.

Nachfolgend wird anhand einer Darstellung von Petrinetzen in den Fig. 2-4 und anhand von vier konsekutiven Schritten eine semantisch geprägte Verhaltenssteuerung beschrieben, mit der zunächst eine Analyse der aktuellen Situation erfolgt und anschließend eine Anpassung an eine mögliche Schadenssituation vorgenommen wird. Technische Anwendungsgebiete von kognitiven Materialien können sich beispielsweise im Leichtbau, im Automobilbau, im Maschinenbau, in der Flugzeugindustrie oder der Textilindustrie erschließen.

Fig. 2 zeigt in der rechten Hälfte einen ersten Schritt einer Verhaltenssteuerung einer Struktur, die Sensoren und Aktuatoren umfasst, beispielsweise ein Flugzeug. Das System weist eine Vorrichtung mit einer Verhaltenssteuerung auf. Ein Petrinetz 52 des Interpretierers umfasst eine Interpretationswurzel 54, die eine höchste Hierarchieebene bildet und Interpretationen bezüglich des Zustandes des Flugzeuges beschreibt. Vom Interpretationswurzelknoten 54 sind mehrere Knoten der nächst niederen Hierarchieebene über die Kanten 56a und 56b verbunden. Die Kante 56a führt auf den Knoten 58a, der den Zustand des Seitenruders des Flugzeuges beschreibt. Weitere Knoten der vergleichbaren Hierarchieebene können beispielsweise der Zustand rechte Tragfläche, der Zustand linke Tragfläche oder der Zustand eines Höhenruders sein. Knoten 58b und 58c einer nächst niederen Hierarchieebene beschreiben Ereignisse, welche den Knoten 58a der höheren Hierarchiestufe beschreiben. Knoten 58b beschreibt ein Schadensereignis, Knoten 58c ein Belastungsereignis. Ein weiterer möglicher Knoten dieser Hierarchieebene kann beispielsweise Alterung sein. Knoten 58d und 58e definieren die nächst niedere Hierarchiestufe, die beispielsweise das Ereignis "Schaden" in einen externen und internen Schaden unterteilen. Die möglichen Ursachen des Zustands Schaden im Knoten 58b, ein externer oder ein interner Schaden, repräsentiert durch die Knoten 58d und 58e, wird jeweils mit einem gewissen Konfidenzmaß gewichtet. Ein Konfidenzmaß ist ein Ausdruck bezüglich der Zuverlässigkeit, dass beispielsweise die Annahme, es liege ein externer Schaden vor, korrekt ist. Die nächst niedrigere Hierarchiestufe beschreibt gegenüber den Schadensklassen extern und intern mögliche Ursachen für den externen bzw. internen Schaden. So wird ein im Knoten 58d beschriebener externer Schaden mit einer Konfidenz c von einem Impact-Ereignis, also einem Einschlag eines Gegenstandes auf die Struktur, verursacht. Diese mögliche Ursache des externen Schadens 58d ist im Knoten 58f repräsentiert, der wiederum mit mehreren Knoten 58g und 58h über Kanten, welche mit einer Wahrscheinlichkeit P gewichtet sind, verbunden. Die Summe aller Wahrscheinlichkeiten eines Knotens über die Anzahl der Kanten zur nächst niedrigeren Hierarchieebene ergibt dabei im Gegensatz zu Konfidenzmaßen den Wert 1. Die Knoten 58g und 58h, welche die Schadensursache klassifizieren, sind mit der niedrigsten Hierarchieebene über Kanten verbunden, wobei die niedrigste Hierarchieebene durch Bedeutungsknoten 62a, 62b und 62c gebildet wird.

Eine aus den Sensorsignalen abgeleitete Positionsinformation kann in Lokalisierungsknoten eines Lokalisierungsnetzwerkes 64 repräsentiert und mit den Bedeutungsknoten 62a-c korreliert werden. Die Positionsinformation kann bspw. aus der bekannten Anordnung der Sensoren an oder in dem System abgeleitet werden. In einem einfachen Fall zeigt bspw. das Signal des Sensors, wie etwa eines Dehnungsmessstreifens oder eines Piezosensors, der bezüglich einem Einschlag-Ereignis mit einer geringsten Distanz angeordnet ist, eine größte Signalamplitude. Die Bedeutungsknoten 62a-c stellen jeweils eine von dem Interpretierer bereitgestellte Informationshypothese dar, die ein Ergebnis eines vom Interpretierer durchgeführten Interpretationslaufes sind. Ein auftretendes Ereignis an dem Flugzeug führt beispielsweise dazu, dass Sensoren, welche einen Sektor n überwachen und durch einen Sektorknoten 66 repräsentiert sind, ein Sensorsignal liefern, aus welchem durch den Analysator eine Zeichenfolge extrahiert wird. In anderen Worten übersetzt der Analysator das/die Sensorsignal(e) in eine gewichtete Mehrzahl von Zeichenketten, beispielsweise dargestellt als gewichteter endlicher Automat, welche das/die Sensorsignal(e) repräsentiert.

Dieses Muster wird an den Interpretierer geliefert, welcher den Interpretationslauf startet. Den verschiedenen gestarteten Interpretationshypothesen, beispielsweise "Schaden" im Knoten 58b oder "Belastung" im Knoten 58c, ist jeweils ein Ausgangskonfidenzmaß zugeordnet. Alternativ kann der jeweiligen Interpretationshypothese auch eine Ausgangswahrscheinlichkeit zugeordnet sein. Der Interpretierer liefert als Ergebnis der angestoßenen Interpretationsläufe beispielsweise die Interpretationshypothesen, dass die Sensorsignale den Zustand des Flugzeuges betreffen können, aufgrund der Position der Sensoren den Zustand des Seitenruders, dass die Sensorsignale durch einen aufgetretenen Schaden verursacht werden können, dass dieser Schaden extern verursacht ist, dass die externe Ursache in einem Impact-Ereignis begründet liegt und dass dieses Impact-Ereignis basierend auf den extrahierten Mustern der Sensorsignale ein Impact-Ereignis mit einer Energie von 20-30 Joule umfasst und zum Bedeutungsknoten 62b mit einer Bedeutung "leichte Beschädigung möglich" führt. Diese Interpretationshypothese 62b kann aufgrund des Durchschreitens des Petrinetzes 52 mit einer Konfidenz und/oder einer Wahrscheinlichkeit gewichtet werden. Eine alternative Interpretationshypothese 62a interpretiert die Sensorsignale mit "normal", da im Bedeutungsknoten 62a das Impact-Ereignis basierend auf den Sensorsignalen eine kleinere Energie umfasst als 20-30 Joule. Eine alternative Interpretationshypothese 62c mit der Bedeutung "50 % Restfunktion" wird beispielsweise dadurch generiert, dass der Schaden als intern klassifiziert wird und von einer Delamination verursacht ist und zu einem kleinen internen Schaden führt, was zum Bedeutungsknoten 62c führt.

Die Mehrzahl an Interpretationshypothesen wird der Verhaltenssteuerung 26 zur Verfügung gestellt. Das der Verhaltenssteuerung 26 zur Verfügung gestellte Ergebnis in Form der Bedeutungsknoten 62a-c umfasst für jede der Interpretationshypothesen ein Ergebnis-Konfidenzmaß, welches vom Interpretierer berechnet ist. Die jeweiligen Konfidenzen oder Wahrscheinlichkeiten einer Kante sind somit entweder die jeweilige Wahrscheinlichkeit oder Konfidenz einer verzweigenden Kante oder das Ausgangskonfidenzmaß oder die Ausgangswahrscheinlichkeit. Die Verhaltenssteuerung erzeugt mithilfe einer algorithmisch definierten Strategie, beispielsweise einem Markov-Decision-Process, die ein Handlungsziel verfolgt, aus den Sensorsignalen Aktuatorsignale. Die Verhaltenssteuerung trifft unter Berücksichtigung des gesamten Informationsstatus ihre Entscheidung.

In alternativen Ausführungsbeispielen ist den Kanten zwischen der ersten und der zweiten Hierarchieebene sowie den Kanten zwischen der weiteren Hierarchieebenen des Petrinetzes 52 eine Wahrscheinlichkeit P oder eine Konfidenz c zugeordnet, sodass eine Information des Sektorknotens 66 den Ereignisraum nicht auf das Seitenleitwerk reduziert, sondern Interpretationshypothesen des gesamten Petrinetzes 52 berechnet werden.

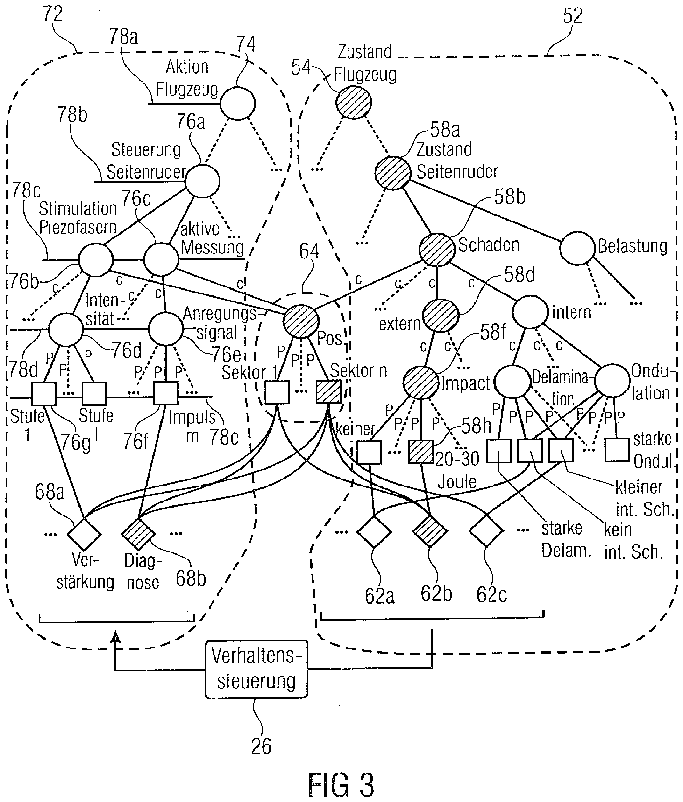

Fig. 3 zeigt in der unteren und linken Hälfte einen zweiten Schritt der Verhaltenssteuerung, der auf den ersten Schritt folgt. Die Verhaltenssteuerung 26 wählt aus den durch den Interpretierer zur Verfügung gestellten Interpretationshypothesen diejenige aus, die aufgrund einer größten Wahrscheinlichkeit oder einer größten Konfidenz in dem Bedeutungsknoten 62b mit der Bedeutung "leichte Beschädigung möglich" repräsentiert ist. Basierend auf der durch den Strategieprozessor bereitgestellten Strategie wählt die Verhaltenssteuerung 26 aus den zur Verfügung stehenden Reaktionen "Strukturverstärkung" eines Bedeutungsknotens 68a und "Zustandsdiagnose" eines Bedeutungsknotens 68b eine der Reaktionen aus oder erzeugt sich die Reaktionsmöglichkeiten aus den zur Verfügung stehenden Handlungen, bspw. Anregung der Piezofasern. Die Interpretationshypothese 62b "leichte Beschädigung möglich" wird aufgrund der Strategie derart bewertet, dass in dem Impact-Ereignis (Knoten 58f) mit einer Stärke von 20-30 Joule (Knoten 58h) kein kritischer, jedoch ein ggf. sicherheitsrelevanter Zustand des Systems Flugzeug vermutet wird. Basierend auf der Strategie wählt die Verhaltenssteuerung 26 die Reaktion "Zustandsdiagnose" des Bedeutungsknotens 68b aus, um in einem nächsten Schritt detailliertere Informationen erhalten zu können und aggregiert den Informationsstatus mit der getroffenen Entscheidung. Die von der Verhaltenssteuerung 26 ausgewählte Interpretationshypothese sowie die bestimmte Reaktion werden in dem Informationsstatusspeicher hinterlegt und mit dort bereits gespeicherten Informationen zu einem aktuellen Informationsstatus aggregiert. In anderen Worten wählt die Verhaltenssteuerung aufgrund einer erlernten Strategie die Artikulation Zustandsdiagnose. Es erfolgt eine aktive Messung am Seitenruder durch Ausgabe des Anregungssignals m über Aktuatoren in Sektor n. Diese Position wird von der Interpretation übernommen. Der Artikulierer umfasst ein Petrinetz 72. Analog dem Petrinetz 52 des Interpretierers umfasst das Petrinetz 72 des Artikulierers einen Artikulationswurzelknoten 74 und Artikulationsknoten 76a-e in hierarchischen Ebenen 78a-e. Eine Artikulationshypothese kann als ein Pfad zwischen dem Artikulationswurzelknoten 74 und einem Bedeutungsknoten 68a oder 68b dargestellt werden, wobei ein Bedeutungsknoten 68a oder 68b vom Artikulationswurzelknoten 74 ausgehend über mehrere Pfade also Artikulationshypothesen erreicht werden kann. Für jeden dieser Pfade, also für jede dieser Artikulationshypothesen, kann ein Ergebnis-Konfidenzmaß oder eine Ergebnis-Wahrscheinlichkeit bestimmt werden.

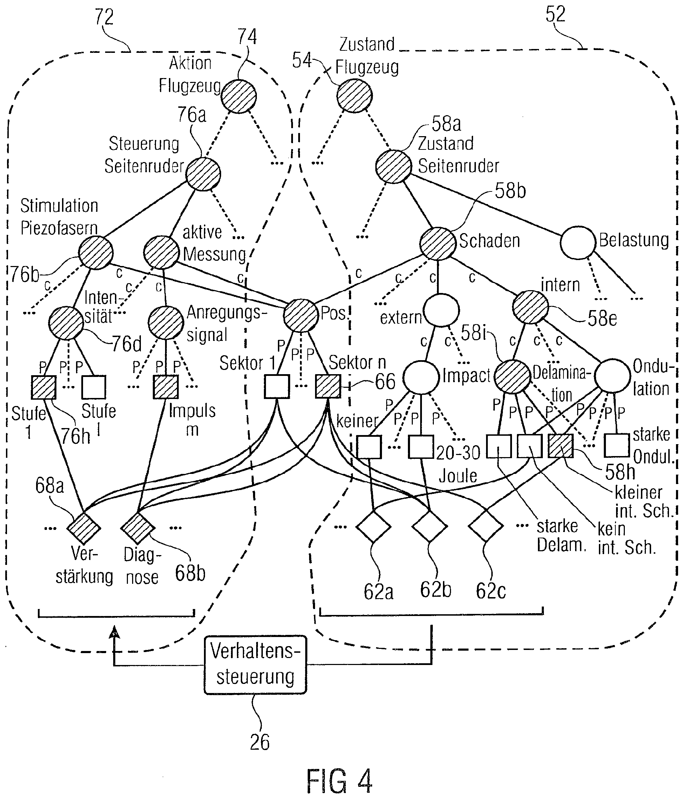

Die Knoten 76a-e sind zwischen den hierarchischen Ebenen 78a-e über Kanten verbunden, wobei jeder Kante eine Wahrscheinlichkeit P oder ein Konfidenzmaß c zugeordnet ist. Um den Zustand des Flugzeuges analog dem Interpretationswurzelknoten 54 zu bestimmen, wird die "Aktion Flugzeug" des Artikulationsknotens 74 ausgewählt, um entsprechend dem Interpretationsknoten 58a "Zustand Seitenruder" die "Steuerung Seitenruder" des Artikulationsknotens 76a zu verifizieren. Mit der Artikulationshypothese wird angenommen, dass mit einem Impuls der Form m, beispielsweise ein Chirp-Muster, ein Anregesignal, bezeichnet im Knoten 76e, erzeugt werden kann, das eine aktive Messung, bezeichnet im Knoten 76c, ermöglicht. Der Ort der aktiven Messung wird dabei unter zur Hilfenahme der Positionsangaben des Sensornetzwerks 64 bestimmt. Das bedeutet, dass die Verhaltenssteuerung aufgrund der ausgewählten Interpretationshypothese "leichte Beschädigung möglich" und basierend auf dem Informationsstatus "Neues Ereignis" die Reaktion "Zustandsdiagnose" auswählt und der Artikulierer basierend auf dieser Auswahl Art und Ort der Zustandsdiagnose bestimmt, indem er die Artikulationshypothesen startet und diese basierend auf Wahrscheinlichkeiten und Konfidenzen fortführt. Die vom Artikulierer erzeugte Artikulationshypothese "aktive Messung" in Sektor n mit einem Anregungssignal der Impulsform m zur Zustandsdiagnose wird vom Artikulierer ausgewählt und diese Bedeutung in eine Zeichenkette umgesetzt. Die Zeichenkette wird an den Synthetisierer weitergegeben. Dieser erzeugt Aktorsignale zum Ansteuern der entsprechenden Aktuatoren. Eine konsekutive Auswertung basierend auf der erfolgten Anregung durch die Aktuatoren wird in nachfolgender Fig. 4 dargestellt.

Fig. 4 zeigt in der rechten einen dritten Schritt der Verhaltenssteuerung, der auf den in Fig. 3 dargestellten zweiten Schritt folgt. Die Anregung der Struktur durch die Aktuatoren, welche als Reaktion auf das festgestellten Impact-Ereignis ausgelöst wurde, führt zu weiteren Sensorsignalen, die vom Analysator erfasst und analysiert werden. Das entsprechende Analyseergebnis des Analysators wird dem Interpretierer bereitgestellt, welcher erneut Interpretationshypothesen startet. Analog der Beschreibungen in Fig. 2 ist der Interpretierer ausgebildet, um Wahrscheinlichkeiten P oder Konfidenzen c durch das Petrinetz 52 vom Artikulationsnoten 54 zu den Bedeutungsknoten 62a "normal", 62b "leichte Beschädigung möglich" und 62c "50 % Restfunktion" über eine Kombination der möglichen Pfade vom Interpretationswurzelknoten 54 zu den Bedeutungsknoten 62a-c zu bestimmen. Für jeden dieser Pfade, also für jede dieser Interpretationshypothesen, kann ein Ergebnis-Konfidenzmaß oder eine Ergebnis-Wahrscheinlichkeit bestimmt werden.

Die Verhaltenssteuerung 26 ist ausgebildet, um die Interpretationshypothese mit der höchsten Wahrscheinlichkeit oder dem größten Konfidenzmaß auszuwählen. Der Informationsstatus des Systems, welcher im Informationsstatusspeicher hinterlegt ist, umfasst dabei auch die Information, dass in einem vorangegangenen Schritt (Schritt 2) eine Systemanregung zur aktiven Messung des Strukturzustandes als Reaktion auf Sensorsignale bestimmt wurde. Die Verhaltenssteuerung 26 passt darauf basierend Wahrscheinlichkeiten und Konfidenzen der Kanten im Petrinetz 52 an. Das bedeutet, dass die Verhaltenssteuerung 26 Kenntnis davon hat, dass die erfassten und ausgewerteten Sensorsignale aufgrund eigener Entscheidungen in der Struktur induziert wurden und mit einer Wahrscheinlichkeit bzw. Konfidenz nicht von einem externen Ereignis stammen, wenn die Sensorsignale ein erwartetes Muster aufweisen. Basierend auf dem Kenntnisstand bezüglich der Systemhistorie und der Anpassung der Wahrscheinlichkeiten und/oder Konfidenzmaße und den aus den Sensorsignalen extrahierten Mustern, die bspw. auf eine vergrößerte Strukturdämpfung schließen lassen, wird die Interpretationshypothese, dass ein kleiner interner Schaden in Form einer Delamination intern festgestellt wird, mit einer größeren Wahrscheinlichkeit oder Konfidenz bewertet und von der Verhaltenssteuerung 26 als Grundlage zur Reaktionsbestimmung ausgewählt, um basierend auf der ausgewählten Interpretationshypothese eine weitere Reaktion zu bestimmen. Der Artikulierer liefert dem Synthetisierer Eingangssignale aus der Bedeutung der Artikulation mit der größten Wahrscheinlichkeit oder Konfidenz zur Erstellung von Aktuatorsignalen.

Dabei kann genutzt werden, dass der Artikulierer Kenntnis von dem verwendeten Anregungssignal hat und diese Kenntnis im Strukturlernprozessor hinterlegt ist. Die vom Analysator empfangenen und ausgewerteten Sensorsignale können vom Analysator bspw. darauf überprüft werden, ob sie, möglicherweise in einem gewissen Toleranzbereich, einer erwarteten Strukturantwort der Struktur auf die Anregungssignale der Aktuatoren entsprechen. Erfolgt während der Anregung der Struktur durch die Aktuatoren und der Messung der Strukturantwort durch die Sensoren ein weiteres Ereignis, beispielsweise ein weiterer Impact, so kann der Analysator eine Abweichung der erfassten Sensordaten oder ein Abweichen des Musters der Sensorsignale von den erwarteten Sensordaten oder Mustern feststellen. Dies hat zur Folge, dass eine andere Interpretationshypothese, beispielsweise ein weiterer Impact mit 20-30 Joule, von der Verhaltenssteuerung zur Bestimmung einer Reaktion ausgewählt wird. Das bedeutet, dass die Verhaltenssteuerung 26 ausgebildet ist, um die Gewichtung der einzelnen Kanten des Petrinetzes 52 in Form der Wahrscheinlichkeiten oder Konfidenzen anzupassen. Das Interpretationsergebnis lautet: Der Zustand Flugzeug (Interpretationswurzelknoten 54) weist bezüglich des Seitenruders (Knoten 58a) an der Position n (Sektorknoten 66) einen Schaden (Knoten 58b) im Inneren der Struktur (58c) auf, der einer Delamination (Knoten 58i) entspricht und ein kleiner interner Schaden (Knoten 58h) ist. Über den Lernprozessor 38 und den Strukturmodellprozessor 48 kann jeweils eine Erfolgskontrolle bezüglich der empfangenen Sensorsignale mit Hinblick auf Aktuatorsignale oder den bereitgestellten Bedeutungen von Interpretationshypothesen und daraus bestimmten Reaktionen erfolgen.

Basierend auf diesen Informationen bestimmt die Verhaltenssteuerung als folgende Reaktion die Reaktion Strukturverstärkung des Bedeutungsknotens 68a und aggregiert dies im Informationsstatusspeicher.

In einem vierten Schritt, der auf den dritten Schritt folgt, erzeugt der Artikulierer basierend auf der Reaktion und dem Modellprozessor mehrere Artikulationen durch Pfade zwischen dem Artikulationswurzelknoten 74 und der Reaktion Strukturverstärkung im Bedeutungsknoten 68 a, beispielsweise durch die Artikulation: Aktion am Flugzeug (Artikulationswurzelknoten 74) bezüglich des Seitenruders (Knoten 76a) durch Stimulation von Piezofasern (Knoten 76b) in Sektor n (Sektorknoten 66) variabel bezüglich der Intensität (Knoten 76d) mit einer Intensitätsstufe 1 (Knoten 76h), um beispielsweise über eine Strukturverstärkung durch angeregte Piezofasern zusätzliche Stabilität der Flugzeugstruktur zu ermöglichen, bis das Flugzeug gelandet und eine Reparatur möglich ist, wie es in der linken Hälfte der Fig. 4 dargestellt ist. Der Artikulierer wählt die Artikulation mit der höchsten Wahrscheinlichkeit oder der höchsten Konfidenz aus, um daraus eine Zeichenfolge zu erzeugen und diese dem Synthetisierer zu liefern. Eine Bewertung, ob eine gewählte Reaktion zu beabsichtigten Ergebnissen entsprechend der Handlungsstrategie und/oder dem Handlungsziel führt, kann über weitere iterative Schritte erfolgen. Beispielsweise kann über eine erneute Systemanregung und Sensorauswertung bestimmt werden, ob eine Anregung der Piezofasern mit der Intensität der Stufe 1 zu einer hinreichenden Strukturverstärkung führt oder ob die Intensität oder der Ort der Strukturanregung verändert werden muss, um das Handlungsziel zu erreichen. Diese Informationen können dazu verwendet werden, um über den Lernprozessor den Strategieprozessor und mithin zukünftige Strategien anzupassen. Das bedeutet, dass beispielsweise nach dreimaliger Erkenntnis, dass eine Intensitätsstufe 1 zur Strukturverstärkung nach einem Impact mit 20-30 Joule nicht ausreichend ist, bei zukünftigen Ereignissen bereits mit einer Intensitätsstufe 2 begonnen wird. Somit ist die Strategie von einem Ursprungszustand (bspw. ein Auslieferungszustand) beeinflusst, welcher basierend auf der Systemhistorie angepasst ist. Somit erfolgt eine Anpassung der Handlungsstrategie basierend auf der Systemvergangenheit.

Zusammengefasst ist die Verhaltenssteuerung unter anderem ausgebildet, um die Konfidenzmaße, das Ausgangskonfidenzmaß, die Wahrscheinlichkeiten oder die Ausgangswahrscheinlichkeit basierend auf der Verhaltensstrategie zu verändern.

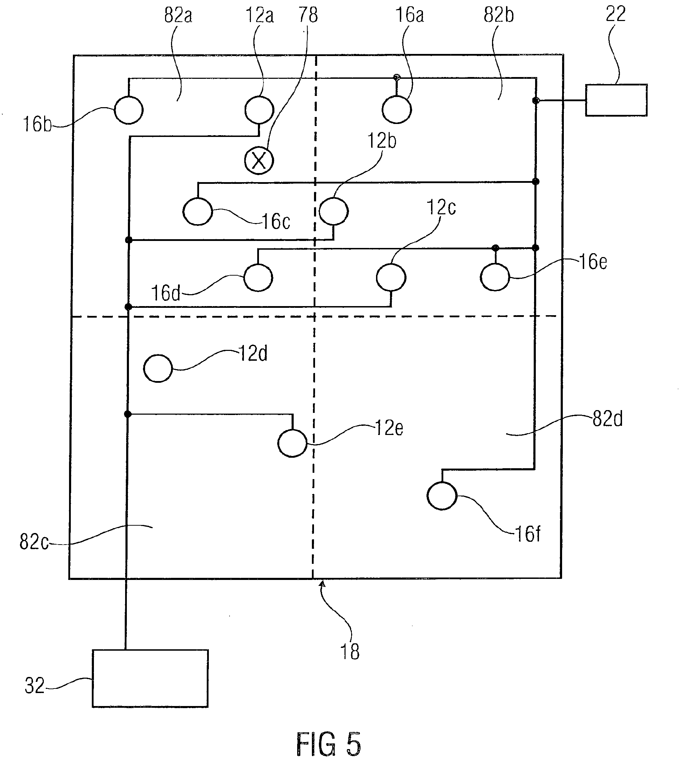

Fig. 5 zeigt eine schematische Darstellung einer Anordnung von Sensoren 16a-f und Aktuatoren 12a-e an dem System mit dem kognitiven Material 18. Grundlage für ein auszuwertendes Ereignis kann ein Impact-Ereignis, beispielsweise ein Vogelschlag, an einer Position 78 des Materials 18 sein, welches dazu führt, dass Sensorwerte von Sensoren 16a, 16b und 16c einen im Analysator 22 hinterlegten Schwellwert überschreiben. Die Überschreitung des Schwellwertes kann Aufschluss darüber liefern, dass ein auszuwertendes Ereignis vorliegt. Eine Auswertung der Sensorsignale durch den Analysator 22 kann beispielsweise Laufzeitunterschiede von Strukturwellen von der Position 78 ausgehend zur jeweiligen Position der Sensoren 16a, 16b und/oder 16c berücksichtigen, so dass die Position 78 und damit der relevante Sektor 82a des Materials 18 bestimmbar ist. Aufgrund der erfassten Signalamplituden an den Sensoren 16a-c und weiterer Informationen, beispielsweise Laufzeit- oder Phasenunterschiede zwischen den Sensorsignalen, kann ein Muster aus den Sensorsignalen extrahiert werden, welches dem Interpretierer zur Verfügung gestellt wird und Rückschlüsse auf das eingetretene Ereignis zulässt. Entsprechend kann auch die Anregung der Aktuatoren 12a-e basierend auf Aktuatoransteuersignalen des Synthetisierers 32 bestimmt werden.

Alternativ oder zusätzlich können auch andere oder weitere der Sensoren 16a-e zur Bestimmung des eingetretenen Ereignisses verwendet werden. Auch kann eine Anregung eines entfernten Aktuators, beispielsweise 12e, genutzt werden, um eine Störung einer als homogen erwarteten Wellenausbreitung an einem entfernten Ort, wie beispielsweise dem Sensor 16a oder 16b, sensieren zu können.

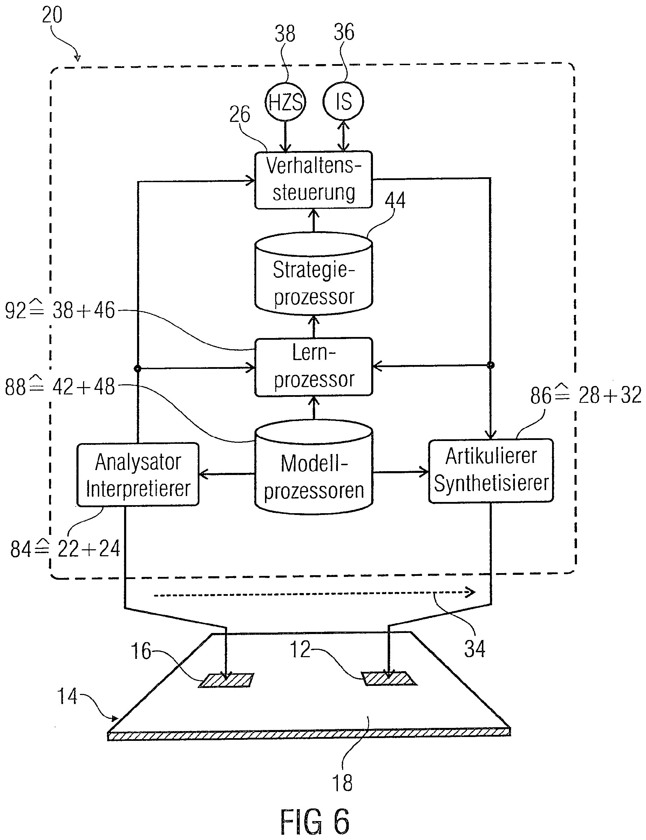

Bezug nehmend auf Fig. 1 wird nachfolgend eine vereinfachte Darstellung einer Vorrichtung zur Informationsverarbeitung und Verhaltenssteuerung von kognitiven Materialien gegeben. Fig. 1 zeigt eine detaillierte Darstellung einer solchen Vorrichtung, wobei in Fig. 6 manche Komponenten zusammengefasst sind.

Fig. 6 zeigt eine schematische Darstellung der Vorrichtung aus Fig. 1, bei der Komponenten zu einem kompakteren System zur Informationsverarbeitung und Verhaltenssteuerung für kognitive Materialien in einem Perzeptions-Aktions-Zyklus zusammengefasst sind. Der Analysator 22 und der Interpretierer 24 der Fig. 1 sind in Fig. 6 gemeinsam dargestellt, so dass die Analyse der Sensordaten und das Starten der Interpretationshypothesen gemeinsam erfolgt. Die Verhaltenssteuerung stellt die Reaktionsauswahl einer Komponente 86 bereit, die den Artikulierer 28 und den Synthetisierer 32 der Fig. 1 bildet. Die Komponente 86 ist somit ausgebildet, um aus der Reaktion der Verhaltenssteuerung 26 die Ansteuersignale der Aktuatoren 12 zu generieren und zu synthetisieren.

Die Modellprozessoren 42 und 48 der Fig. 1 sind in einem gemeinsamen Modellprozessor 88 zusammengefasst. Damit kann ein gemeinsamer Lernprozessor 92, welcher die Funktionen des Lernprozessors 38 und des Strukturlernprozessors 46 aggregiert, derart zusammengefasst werden, dass der Lernprozessor 92 die Modelle des Lernprozessors 88 manipuliert bzw. anpasst.

Eine Kombination verschiedener Komponenten, beispielsweise des Analysators und des Interpretierers, des Artikulierers 28 und des Synthetisierers 32 oder der Modellprozessoren 42 und 48 (Strukturmodellprozessor), erlaubt eine kompaktere Bauweise der Vorrichtung, da thematisch verwandte Aufgaben innerhalb einer Komponente abgearbeitet werden. Eine Vorrichtung 20 kann so möglicherweise gegenüber Vorrichtung 10 aus Fig. 1 kompakter oder kostengünstiger realisiert werden.

Aus dem Sensorsignal werden mithilfe einer Mustererkennung durch die Perzeption, gebildet aus dem Analysator 22 und dem Interpretierer 24, zuerst Merkmale extrahiert und daraus Zeichen gewonnen. Um das Verhalten steuern zu können, wird die Semantik dieser Zeichen erkannt, wobei die Zeichenerkennung durch den Lernprozessor 92 adaptiert wird. Die kognitive Steuerung löst daraufhin basierend auf einer ebenfalls automatisch erlernten optimalen Entscheidungsstrategie eine entsprechende zielgerichtete Aktion aus. Deren Erfolg wird wiederum über die resultierenden Sensorsignale kontrolliert.

Obwohl in vorangegangenen Ausführungsbeispielen lediglich zwei Perzeptions-Aktions-Zyklen in Form von erfassten und ausgewerteten Sensorsignalen mit daraus abgeleiteten Aktionen dargestellt sind, kann ein beschriebenes System in einer praktischen Anwendung weitere Zyklen durchlaufen. Die in Fig. 2-4 dargestellten Schritte der Verhaltenssteuerung zeigen ein Beispiel für eine nichtsequenzielle Repräsentation von Semantik in Form einer gewichteten Merkmal-Werte-Relation. Diese Repräsentationen bilden den Informationsstatus und entstehen als Ergebnis der Interpretation und sind Eingangsdaten der Artikulation. Die Interpretations- und Artikulationsmöglichkeiten sind vielfältiger, wie es durch die zusätzlichen Kanten, die in einem durch Punkte angedeuteten Knoten münden, angedeutet ist. Das bedeutet, dass in jeder Ebene mit Ausnahme der Artikulationswurzel- und der Interpretationswurzelebene eine Mehrzahl bis Vielzahl möglicher Knoten und Zustände existieren, so dass eine Vielzahl möglicher Interpretationen in einem realen System existieren kann.

Das Ablaufbeispiel der Fig. 2-4 ist dahin gehend vereinfacht, dass bei einer gewichteten Semantikrepräsentation alle möglichen Bedeutungen mit unterschiedlichen Wahrscheinlichkeiten gleichzeitig vorliegen. Beispielsweise liegt eine Bedeutung "normaler Zustand" mit einer Wahrscheinlichkeit 5 %, eine Bedeutung "50 % Restfunktion" mit einer Wahrscheinlichkeit von 10 % und eine Bedeutung "leichte Beschädigung möglich" mit einer Wahrscheinlichkeit vom 85 % vor. Außerdem wird der Informationsstatus durch eingehende Interpretationen erweitert, anstelle den Informationsstatus zu ersetzen. Die jeweiligen Schritte der Verhaltenssteuerung werden in dem Informationsstatus aggregiert. Beispielsweise "vergisst" das System nicht, dass ursprünglich ein leichter Impact detektiert wurde. Die Verhaltenssteuerung trifft unter Berücksichtigung des gesamten Informationsstatus ihre Entscheidung.

Obwohl in vorangegangenen Ausführungsbeispielen Aktuatoren als Piezofasern erläutert wurden, sind prinzipiell auch andere Arten von Aktuatoren anwendbar, beispielsweise Ultraschallwandler, Piezo-Patches, hydraulische oder pneumatische Aktuatoren.

Sensoren können beispielsweise als Dehnungsmessstreifen oder Piezo-Patches ausgeführt sein. Sind sowohl Sensoren als auch Aktuatoren als Piezo-Patches dimensioniert, ist beispielsweise eine gemeinsame, mitunter auch gleichzeitige, Nutzung eines Piezo-Patches als Sensor und/oder Aktuator vorstellbar.

Ein kognitives Material bzw. ein kognitives System kann erfordern, dass es zu zielgerichtetem Verhalten fähig ist. Wesentliche Kennzeichen der Informationsverarbeitung und Verhaltenssteuerung für kognitive Materialien sind beispielsweise der Perzeptions-Aktions-Zyklus, das bedeutet eine Verarbeitung in der Reihenfolge Material, Sensoren, kognitive Informationsverarbeitung/Handlungssteuerung, Aktuatoren, Material sowie die Erweiterung der Signalverarbeitung um eine Bedeutungsanalyse, die Berücksichtigung von Verhaltensstrategien und automatisches Lernen.

Die Informationsverarbeitung und Verhaltenssteuerung für kognitive Materialien erfüllt folgende Funktionen: eine Mustererkennung, eine Verhaltenssteuerung und ein Lernen bzw. Aufmerksamkeitssteuerung. Die Mustererkennung umfasst dabei eine Merkmalextraktion aus den Sensorsignalen, somit den Schritt Signal-Merkmal der vorangegangenen Aufzählung, einen Mustererkenner, das bedeutet Merkmale in Zeichen zu überführen, und eine semantische Verarbeitung, das bedeutet Zeichen in ihre Bedeutung zu überführen (Äußerungs-Bedeutungs-Umsetzer). Die Verhaltenssteuerung umfasst einen Entscheidungsalgorithmus, das bedeutet aus einer Bedeutung eine Wirkung, Handlung oder Reaktion abzuleiten, eine Synthese von Aktuatorsignalen, das bedeutet aus der gewünschten Wirkung eine Bedeutung mittels eines Bedeutungs-Äußerungs-Umsetzers abzuleiten, diese in Zeichen zu überführen, Merkmale zu generieren und ein Signal zu synthetisieren, um die gewünschte Wirkung herbeizuführen.

Eine Steuerung der Materialeigenschaften ist dabei abhängig vom Betriebszustand. So können Materialien beispielsweise in diversen Konstruktionselementen einer Struktur, beispielsweise eines Flugzeugs oder eines Kraftfahrzeugs während des Betriebes, beispielsweise des Fluges oder der Fahrt, ein je nach Situation, wie Landen, Parken oder Aufprall, verschiedenes Verhalten zeigen.

Eine Steuerung von Materialeigenschaften in Abhängigkeit von Umgebungsbedingungen bedeutet beispielsweise, dass eine wetterabhängige Steuerung der Eigenschaften von Rotorblättern an Windkraftanlagen realisierbar ist. Auf diese Weise können extreme Witterungsbedingungen wie Orkane ohne größere Schäden überstanden werden. Treten Orkane, wie erwartet, über die Zeit mit zunehmender Häufigkeit auf, kann das automatische Lernen dies berücksichtigen und sich an die wechselnden Umgebungsbedingungen selbst anpassen.

Damit kann beispielsweise eine Maximierung einer Lebensdauer von Strukturen umgesetzt werden. Dazu gehören auch tragende Strukturen. Materialien mit anpassbarer Festigkeit und Steifigkeit können beispielsweise durch eine Integration von Aktuatorik umgesetzt werden. Eine maximale Festigkeit einer Tragstruktur kann adaptiv hergestellt werden, beispielsweise bei Zuständen maximaler Belastung. Damit kann die Lebensdauer des jeweiligen Tragwerks erhöht und die technische Sicherheit verbessert werden.

Weiterhin kann eine Minimierung von Materialaufwand, beispielsweise bei Leichtbaustrukturen, erzielt werden. Der Einsatz von Faserverbundwerkstoffen, hauptsächlich kohlenstofffaser-verstärkter Kunststoff (CFK) bzw. Carbon Fiber Reinforced Plastics (CFRP) in mobilen Anwendungen, beispielsweise der Luftfahrt, bringt Vorteile, wie beispielsweise verbesserte Designmöglichkeiten oder mögliche Gewichtsersparnis und damit niedrigere Betriebskosten. Mit kognitiven, die Festigkeit und Steifigkeit optimierenden Materialien ist eine werkstoffsparende Dimensionierung möglich, um verwendete Festigkeitsreserven in Form von zusätzlichem Material zu reduzieren. Die Festigkeitsreserven werden verwendet, um Unbekanntheiten und mangelnde Erfahrung mit neuen Materialien, speziell in sicherheitsrelevanten Strukturen, zu kompensieren.

Eine Zustandsdiagnose des Materials kann genutzt werden, um eine Wartung des Materials zu erleichtern, indem der Zustand des Materials und damit auch der gesamten Konstruktionseinheit von einem Servicetechniker jederzeit abgefragt werden kann. Beispielsweise kann der Informationsstatus über ein drahtloses Interface gesendet werden. Dadurch kann von einer zyklischen Wartung zu einer zustandsabhängigen Wartung übergegangen werden. Dies kann die Sicherheit erhöhen und Kosten sparen. Die Zustandsdiagnose kann beispielsweise durch Sensornetze, welche akustische Plattenwellen detektieren, oder durch Nanodiamanten, die bei einer eintretenden Korrosion eine Fluoreszenz ändern, erfolgen.

Eine Reaktion auf diese Zustandsdiagnose kann auch in einer automatischen Reaktion münden, wie es vorangegangene Ausführungsbeispiele zeigen. Damit können beispielsweise fehlerhafte Bauteile in Abhängigkeit vom Grad der Beschädigung gezielt entlastet werden, geschädigte Bereiche einer Selbstheilung unterzogen werden, beispielsweise durch von Aktuatoren induzierte Strukturverstärkung, oder bei einem Missbrauch oder einem Diebstahl Systeme unbrauchbar gemacht werden, indem beispielsweise eine Verhaltenssteuerung einer Komponente oder eines Systems, das feststellt, dass es aus seinem Kontext, beispielsweise dem Flugzeug, entfernt wurde, durch Aktuatoren derart eine Überlast induziert, dass irreparable Strukturschädigungen entstehen oder Speicherelemente in Modell- oder Strategieprozessoren gelöscht werden.

Diese automatische Reaktion schließt bei kognitiven Strukturen eine Prioritätssteuerung bei sensorischem Overload ein. Bionisch ausgedrückt bedeutet dies, dass das Material über eine gewisse Aufmerksamkeit verfügt und die wichtigste Reaktion zuerst zeigt.

Eine Anwendung von adaptronischen Systemen und Smart Materials kann die oben beschriebenen Probleme und Aufgabe nur teilweise lösen. Essenziell für eine erfindungsgemäße Umsetzung der obigen Vorrichtung ist die Umsetzung eines Perzeptions-Aktions-Zyklus und die Fähigkeit zum Lernen und zur Adaption bestehender Modelle und/oder Strategien.

Die Eigenschaften von kognitiven Materialien unterscheiden sich hinsichtlich ihrer Reaktionsart und Reaktionsgeschwindigkeit auf komplexe Einwirkungen deutlich von den Smart Materials. Spezielle Reaktionstests können hierzu definiert werden.

Ein eingehender sensorischer Datenstrom, ein sogenannter Stimulus, wird von dem System durch den Interpretierer in eine semantische Struktur übersetzt, mit welcher Umgebungssituationen möglichst fehlerfrei interpretiert werden können. Eine Adaption an diese Umgebungssituationen findet beispielsweise dann statt, wenn durch eine Handlungsauswahl bzw. eine Reaktionsauswahl in Abhängigkeit vom aktuellen Zustand des Materials eine Endsituation hergestellt wurde, in der der Antrieb zur Adaption, beispielsweise von Modellen oder Strategien, verschwindet. Das bedeutet, der eingestellte Zustand entspricht dem angestrebten Zustand des Handlungsziels. Dabei kann ein sequenzieller Entscheidungsprozess gemäß einer Strategie stattfinden, die auf der Grundlage des inneren Modells der Umgebung erlernt wurde.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers, durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer, Signalprozessor oder Mikrocontroller abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer, Signalprozessor oder Mikrokontroller abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10; 20) zum Ansteuern von Aktuatoren (12; 12a-e) eines Systems (14), das die Aktuatoren (12; 12a-e) und Sensoren (16a-f) aufweist, mit folgenden Merkmalen:
einem Analysator (22) zum Analysieren von Sensorausgangssignalen der Sensoren (16; 16a-f), um ein Analyseergebnis zu erhalten;
einem Interpretierer (24) zum Interpretieren des Analyseergebnisses, um aus dem Analyseergebnis eine Mehrzahl von verschiedenen Interpretationshypothesen zu erhalten, die verschiedene Bedeutungen des Analyseergebnisses darstellen, wobei der Interpretierer (24) ein Petrinetz aufweist, wobei jede Interpretationshypothese eine Menge möglicher Pfade durch das Petrinetz ist und eine Kombination von Wahrscheinlichkeiten oder Konfidenzen aufweist;
einer Verhaltenssteuerung (26) zum Liefern einer eine Bedeutung aufweisenden Reaktion für eine angestrebte Beeinflussung des Systems auf die Mehrzahl von verschiedenen Interpretationshypothesen, wobei die Bedeutung ein Endpunkt eines Pfades durch das Petrinetz ist;
einem Artikulierer (28) zum Erzeugen einer Artikulation aus der Bedeutung der Reaktion, wobei die Artikulation eine Zeichenfolge umfasst und wobei aus der Artikulation durch Synthese Ansteuersignale für die Aktuatoren (12; 12a-e) erzeugbar sind; und
einem Synthetisierer (32) zum Synthetisieren der Ansteuersignale für die Aktuatoren (12; 12a-e) aus der Artikulation und zum Ausgeben der synthetisierten Ansteuersignale an die Aktuatoren;
wobei der Interpretierer (24) ausgebildet ist, um die Mehrzahl von verschiedenen Interpretationshypothesen zu starten und um die gestarteten Interpretationshypothesen unter Verwendung der Konfidenzen (c) oder der Wahrscheinlichkeiten (P) fortzuführen, wobei die Konfidenzen (c) und die Wahrscheinlichkeiten (P) durch einen vorgegebenen Anfangszustand des Systems (14) oder eine Systemvergangenheit definiert sind; und
wobei ein erster Pfad und ein unterschiedlicher zweiter Pfad durch das Petrinetz einen gleichen Endpunkt aufweisen.

2. Vorrichtung (10; 20) gemäß Anspruch 1,
wobei jeder gestarteten Interpretationshypothese ein Ausgangskonfidenzmaß oder eine Ausgangswahrscheinlichkeit zugeordnet ist.

3. Vorrichtung (10; 20) gemäß Anspruch 1 oder 2,
bei welcher der Interpretierer (24) ausgebildet ist, um die gestarteten Interpretationshypothesen unter Verwendung der Konfidenzen (c) fortzuführen und um für jede der Mehrzahl an verschiedenen Interpretationshypothesen ein Ergebnis-Konfidenzmaß zu liefern und
bei der die Verhaltenssteuerung (26) ausgebildet ist, um die Interpretationshypothese mit dem größten Konfidenzmaß auszuwählen und daraus die Reaktionen zu bestimmen.

4. Vorrichtung gemäß einem der vorangegangenen Ansprüche,
bei der die Verhaltenssteuerung (26) ausgebildet ist, um neben der einen Reaktion wenigstens eine weitere Reaktion zu bestimmen, wobei den Reaktionen verschiedene Wahrscheinlichkeiten oder Konfidenzmaße zugeordnet sind.

5. Vorrichtung gemäß einem der vorangegangenen Ansprüche, bei der die Verhaltenssteuerung (26) ausgebildet ist, um bei der Bestimmung der Reaktion eine vorbestimmte oder durch eine Systemvergangenheit beeinflusste Strategie zu verwenden.

6. Vorrichtung (10; 20) gemäß einem der vorangegangenen Ansprüche,
bei der der Interpretierer (24) einen Äußerungs-Bedeutungs-Umsetzer aufweist,
wobei das Analyseergebnis in den Äußerungs-Bedeutungs-Umsetzer eingespeist wird und die Interpretationshypothese aus dem Äußerungs-Bedeutungs-Umsetzer ausgegeben wird.

7. Vorrichtung (10; 20) gemäß einem der vorangegangenen Ansprüche,
die ferner einen Modellprozessor (42) und einen Lernprozessor (38) aufweist, wobei der Lernprozessor (38) ausgebildet ist, um von dem Interpretierer (24) oder der Verhaltenssteuerung (26) mit Eingangssignalen versorgt zu werden; und um den Modellprozessor (42) abhängig von den Eingangssignalen zu steuern,
wobei der Modellprozessor (42) ausgebildet ist, um den Interpretierer (24) oder den Artikulierer (28) abhängig von den Eingangssignalen des Lernprozessors (38) zu steuern;
wobei der Lernprozessor (38) ausgebildet ist, um einen Strategieprozessor (44) zu steuern, wobei der Strategieprozessor (44) ausgebildet ist, um die Verhaltenssteuerung (26) mit einer Verhaltensstrategie abhängig von Informationen aus dem Lernprozessor (38) zu versorgen;
wobei jeder gestarteten Interpretationshypothese ein Ausgangskonfidenzmaß oder eine Ausgangswahrscheinlichkeit zugeordnet ist und bei der die Verhaltenssteuerung (26) ausgebildet ist, um die Konfidenzen, die Wahrscheinlichkeiten oder die Ausgangs-Wahrscheinlichkeiten basierend auf der Verhaltensstrategie zu verändern.

8. Vorrichtung (10; 20) gemäß einem der vorangegangenen Ansprüche,
die einen Informationsstatusspeicher (36) aufweist, der ausgebildet ist, um den Informationsstatus des Systems (14) oder einen aktuellen Zustand des Systems (14) zu speichern;
wobei der Informationsstatusspeicher (36) ausgebildet ist, um Interpretationshypothesen aus vergangenen Schritten zu aggregieren, um einen Informationsstatus zu erhalten.

9. Vorrichtung (10; 20) gemäß einem der Ansprüche 1-8,
bei der das System (14) das kognitive Material (18) mit Sensoren (16a-f) und Aktuatoren (12; 12a-e) ist,
bei der die Verhaltenssteuerung (26) ausgebildet ist, um in einem ersten Schritt aus dem Sensorsignal die Reaktionsmöglichkeiten Zustandsdiagnose und Strukturverstärkung zu erzeugen.
bei der die Verhaltenssteuerung (26) ausgebildet ist, um in einem zweiten Schritt, der auf den ersten Schritt folgt, die Reaktion Zustandsdiagnose zu bestimmen;
bei der ein Synthetisierer (32) ausgebildet ist, um in dem zweiten Schritt Aktuatorsignale für die Zustandsdiagnose zu liefern;
bei der der Interpretierer (24) ausgebildet ist, um in einem dritten Schritt, der auf den zweiten Schritt folgt, das Analyseergebnis eines Analysators (22) zu interpretieren;
bei der die Verhaltenssteuerung (26) ausgebildet ist, um in einem vierten Schritt, der auf den dritten Schritt folgt, aus der Interpretation die Reaktion Strukturverstärkung, die sich auf eine Anpassung einer Festigkeit oder Steifigkeit des kognitiven Materials (18) bezieht, zu bestimmen; und
bei der der Synthetisierer (32) ausgebildet ist, um die Aktuatorsignale für die Strukturverstärkung zu liefern.

10. Vorrichtung (10; 20) gemäß einem der vorangegangenen Ansprüche,
bei der der Artikulierer (28) einen Bedeutungs-Äußerungs-Umsetzer aufweist,
wobei die Reaktion in den Bedeutungs-Äußerungs-Umsetzer eingespeist wird und die Artikulation aus dem Bedeutungs-Äußerungs-Umsetzer ausgegeben wird.

11. Vorrichtung (10; 20) gemäß einem der vorangegangenen Ansprüche,
bei der der Artikulierer (28) eine gewichtete Merkmal-Werte-Relation (72) aufweist, das einen Artikulationswurzelknoten (74), mehrere hierarchische Ebenen (78a-e), Knoten (76a-f) und Kanten zwischen einem Knoten (76a-f) einer höheren Ebene (78a-d) und verschiedenen Knoten einer niederen Ebene (78b-e) aufweist,
wobei jeder Kante eine Konfidenz (c) oder eine Wahrscheinlichkeit (P) zugewiesen ist, wobei die gewichtete Merkmal-Werte-Relation (72) eine Mehrzahl von Bedeutungsknoten (68a; 68b) aufweist, die eine niedrigste Hierarchieebene (76f) bilden, und mit der nächst höheren Hierarchieebene (76e) über Kanten verbunden sind, wobei jeder Bedeutungsknoten (68a; 68b) die Bedeutung einer Artikulationshypothese darstellt;
wobei der der Artikulierer (28) ausgebildet ist, um ein Konfidenzmaß, das einer Artikulationshypothese zugeordnet ist, aus einer Kombination von Konfidenzmaßen oder Wahrscheinlichkeiten, die Kanten zwischen dem Bedeutungsknoten (68a; 68b) und dem Artikulationswurzelknoten (74) zugeordnet sind, zu berechnen.

12. Vorrichtung (10; 20) gemäß Anspruch 9,
bei der der Artikulierer (28) ausgebildet ist, um aus der von der Verhaltenssteuerung (26) im zweiten Schritt bestimmten Reaktion Zustandsdiagnose Eingangssignale für den Synthetisierer (32) zu bestimmen und dem Synthetisierer (32) zu liefern; oder
bei der der Artikulierer (28) ausgebildet ist, um aus der von der Verhaltenssteuerung (26) im vierten Schritt bestimmten Reaktion Strukturverstärkung Eingangssignale für den Synthetisierer (32) zu bestimmen und dem Synthetisierer (32) zu liefern.

13. Vorrichtung (10; 20) gemäß einem der vorangegangenen Ansprüche,
die ferner einen Strukturmodellprozessor (48) und einen Strukturlernprozessor (46) aufweist, wobei der Strukturlernprozessor (46) ausgebildet ist, um von dem Analysator (22) oder dem Artikulierer (28) mit Eingangssignalen versorgt zu werden; und um den Strukturmodellprozessor (48) abhängig von den Eingangssignalen zu steuern, so dass eine Anpassung eines Strukturmodells des Analysators (22) und des Synthetisierers (32) erfolgt, um strukturelle Änderungen der Vorrichtung zu kompensieren;
wobei der Strukturmodellprozessor (48) ausgebildet ist, um den Analysator (22) und den Synthetisierer (32) abhängig von den Eingangssignalen des Strukturlernprozessors (46) zu steuern, wobei der Synthetisierer ausgebildet ist, um zum Synthetisieren der Ansteuersignale für die Aktuatoren (12; 12a-e) aus der Artikulation das Strukturmodell zu verwenden.

14. System (14) mit folgenden Merkmalen:
einer Mehrzahl von Aktuatoren (12; 12a-e) und einer Mehrzahl von Sensoren (16; 16a-f), wobei
die Aktuatoren (12; 12a-e) und Sensoren (16; 16a-f) so an dem System (14) angebracht sind, dass eine Aktuatorbetätigung unter Verwendung eines Aktuatorsignals ein erfassbares Sensorsignal hervorruft; und
eine Vorrichtung (10; 20) zur Ansteuerung der Aktuatoren des Systems gemäß einem der Ansprüche 1-13.

15. Verfahren zum Ansteuern von Aktuatoren (12; 12a-e) eines Systems, das die Aktuatoren und Sensoren (16; 16a-f) aufweist, mit folgenden Schritten:
Analysieren von Sensorausgangssignalen der Sensoren (16; 16a-f), um ein Analyseergebnis zu erhalten;
Interpretieren des Analyseergebnisses, um aus dem Analyseergebnis eine Mehrzahl von verschiedenen Interpretationshypothesen zu erhalten, die verschiedene Bedeutungen des Analyseergebnisses darstellen, wobei jede Interpretationshypothese eine Menge möglicher Pfade durch ein Petrinetz ist und eine Kombination von Wahrscheinlichkeiten oder Konfidenzen aufweist;
Liefern einer eine Bedeutung aufweisenden Reaktion für eine angestrebte Beeinflussung des Systems auf die Mehrzahl von verschiedenen Interpretationshypothesen, wobei die Bedeutung ein Endpunkt eines Pfades durch das Petrinetz ist;
Erzeugen einer Artikulation, die eine Zeichenfolge umfasst, aus der Bedeutung der Reaktion, wobei aus der Artikulation durch Synthetisieren Ansteuersignale für die Aktuatoren (12; 12a-e) erzeugbar sind;
Synthetisieren der Ansteuersignale für die Aktuatoren (12; 12a-e) aus der Artikulation; und
Ausgeben der synthetisierten Ansteuersignale an die Aktuatoren;
wobei im Schritt des Interpretierens die Mehrzahl von verschiedenen Interpretationshypothesen gestartet wird und die gestarteten Interpretationshypothesen unter Verwendung von Konfidenzen (c) oder Wahrscheinlichkeiten (P) fortgeführt werden und wobei die Konfidenzen (c) und die Wahrscheinlichkeiten (P) durch einen vorgegebenen Anfangszustand des Systems (14) oder einer Systemvergangenheit definiert sind; und
wobei ein erster Pfad und ein unterschiedlicher zweiter Pfad durch das Petrinetz einen gleichen Endpunkt aufweisen.

## Claims

1. Device (10; 20) for driving actuators (12; 12a-e) of a system (14) comprising the actuators (12; 12a-e) and sensors (16a-f), comprising:
an analyzer (22) for analyzing sensor output signals of the sensors (16; 16a-f) to obtain an analysis result;
an interpreter (24) for interpreting the analysis result so as to obtain from the analysis result a plurality of different interpretation hypotheses representing different meanings of the analysis result, the interpreter (24) comprising a Petri net, each interpretation hypothesis being a set of possible paths through the Petri net and comprising a combination of probabilities or confidences;
a behavior controller (26) for providing a reaction, which has a meaning, for exerting a targeted influence of the system on the plurality of different interpretation hypotheses, the meaning being an end point of a path through the Petri net;
an articulator (28) for producing an articulation from the meaning of the reaction, said articulation including a string of characters, and wherein drive signals for the actuators (12; 12a-e) may be generated from the articulation by means of synthesis; and
a synthesizer (32) for synthesizing the drive signals for the actuators (12; 12a-e) from the articulation and for outputting the synthesized drive signals to the actuators;
wherein the interpreter (24) is configured to start the plurality of different interpretation hypotheses and to continue the started interpretation hypotheses while using the confidences (c) or the probabilities (P), the confidences (c) and the probabilities (P) being defined by a predetermined initial state of the system (14) or a system history; and
wherein a first path and a different second path through the Petri net have a same end point.

2. Device (10; 20) as claimed in claim 1,
wherein each started interpretation hypothesis has an output confidence measure or an output probability associated with it.

3. Device (10; 20) as claimed in claim 1 or 2,
wherein the interpreter (24) is configured to continue the started interpretation hypotheses while using the confidences (c) and to provide a result confidence measure for each of the plurality of different interpretation hypotheses, and
wherein the behavior controller (26) is configured to select that interpretation hypothesis which has the highest confidence measure and to determine the reactions therefrom.

4. Device as claimed in any of the previous claims,
wherein the behavior controller (26) is configured to determine, in addition to the one reaction, at least one further reaction, the reactions having different probabilities or confidence measures associated with them.

5. Device as claimed in any of the previous claims, wherein the behavior controller (26) is configured to use a strategy which has been predetermined or is influenced by a system history in performing the determining step.

6. Device (10; 20) as claimed in any of the previous claims,
wherein the interpreter (24) comprises a meaning-of-expression converter,
the analysis result being fed into the meaning-of-expression converter and the interpretation hypothesis being output from the meaning-of-expression converter.

7. Device (10; 20) as claimed in any of the previous claims,
further comprising a model processor (42) and a learning processor (38), the learning processor (38) being configured to be provided with input signals by the interpreter (24) or the behavior controller (26); and to control the model processor (42) as a function of the input signals,
wherein the model processor (42) is configured to control the interpreter (24) or the articulator (28) as a function of the input signals of the learning processor (38);
wherein the learning processor (38) is configured to control a strategy processor (44), said strategy processor (44) being configured to provide the behavior controller (26) with a behavior strategy as a function of information from the learning processor (38);
wherein each started interpretation hypothesis has an output confidence measure or an output probability associated with it, and wherein the behavior controller (26) is configured to change the confidences, the probabilities or the output probabilities on the basis of the behavior strategy.

8. Device (10; 20) as claimed in any of the previous claims,
comprising an information status memory (36) configured to store the information status of the system (14) or a current state of the system (14);
wherein the information status memory (36) is configured to aggregate interpretation hypotheses from previous steps so as to obtain an information status.

9. Device (10; 20) as claimed in any of claims 1-8,
wherein the system (14) is the cognitive material (18) comprising sensors (16a-f) and actuators (12; 12a-e),
wherein the behavior controller (26) is configured to produce the reaction possibilities of condition diagnoses and structural reinforcement from the sensor signal in a first step;
wherein the behavior controller (26) is configured to determine the reaction of condition diagnosis in a second step following the first step;
wherein a synthesizer (32) is configured to provide actuator signals for the condition diagnosis in the second step;
wherein the interpreter (24) is configured to interpret the analysis result of an analyzer (22) in a third step following the second step;
wherein the behavior controller (26) is configured to determine, in a fourth step following the third step, the reaction of structural reinforcement, which refers to adaptation of a stability or rigidity of the cognitive material (18), from the interpretation; and
wherein the synthesizer (32) is configured to provide the actuator signals for the structural reinforcement.

10. Device (10; 20) as claimed in any of the previous claims,
wherein the articulator (28) comprises a meaning-of-expression converter,
wherein the reaction is fed into the meaning-of-expression converter and the articulation is output from the meaning-of-expression converter.

11. Device (10; 20) as claimed in any of the previous claims,
wherein the articulator (28) comprises a weighted feature/values relation (72) comprising an articulation root node (74), several hierarchical levels (78a-e), nodes (76a-f) and edges between a node (76a-f) of a higher level (78a-d) and different nodes of a lower level (78b-e),
wherein each edge has a confidence (c) or a probability (P) assigned to it, wherein the weighted features/values relation (72) comprises a plurality of nodes of meaning (68a; 68b) which form a lowest hierarchical level (76f) and are connected to the next hierarchical level (76e) up via edges, each node of meaning (68a; 68b) representing the meaning of an articulation hypothesis;
wherein the articulator (28) is configured to calculate a confidence measure associated with an articulation hypothesis from a combination of confidence measures or probabilities associated with edges between the node of meaning (68a; 68b) and the articulation root node (74).

12. Device (10; 20) as claimed in claim 9,
wherein the articulator (28) is configured to determine, from the reaction of condition diagnosis which was determined by the behavior controller (26) in the second step, input signals for the synthesizer (32) and to provide same to the synthesizer (32); or
wherein the articulator (28) is configured to determine, from the reaction of structural reinforcement which was determined by the behavior controller (26) in the fourth step, input signals for the synthesizer (32) and to provide same to the synthesizer (32).

13. Device (10; 20) as claimed in any of the previous claims,
further comprising a structural model processor (48) and a structural learning processor (46), the structural learning processor (46) being configured to be provided with input signals by the analyzer (22) or the articulator (28); and to control the structural model processor (48) as a function of the input signals, so that adaptation of a structural model of the analyzer (22) and of the synthesizer (32) is effected in order to compensate for structural changes of the device;
wherein the structural model processor (48) is configured to control the analyzer (22) and the synthesizer (32) as a function of the input signals of the structural learning processor (46), the synthesizer being configured to use the structural model for synthesizing the drive signals for the actuators (12; 12a-e) from the articulation.

14. System (14) comprising:
a plurality of actuators (12; 12a-e) and a plurality of sensors (16; 16a-f), wherein
the actuators (12; 12a-e) and sensors (16; 16a-f) are mounted on the system (14) such that actuator operation while using an actuator signal causes a detectable sensor signal; and
a device (10; 20) for driving the actuators of the system as claimed in any of claims 1 to 13.

15. Method of driving actuators (12; 12a-e) of a system comprising the actuators and sensors (16; 16a-f), comprising:
analyzing sensor output signals of the sensors (16; 16a-f) to obtain an analysis result;
interpreting the analysis result so as to obtain from the analysis result a plurality of different interpretation hypotheses representing different meanings of the analysis result, each interpretation hypothesis being a set of possible paths through the Petri net and comprising a combination of probabilities or confidences;
providing a reaction, which has a meaning, for exerting a targeted influence of the system on the plurality of different interpretation hypotheses, the meaning being an end point of a path through the Petri net;
producing an articulation, which includes a string of characters, from the meaning of the reaction, wherein drive signals for the actuators (12; 12a-e) may be generated from the articulation by synthesizing;
synthesizing the drive signals for the actuators (12; 12a-e) from the articulation; and
outputting the synthesized drive signals to the actuators;
wherein the step of interpreting includes starting the plurality of different interpretation hypotheses and continuing the started interpretation hypotheses, and wherein the confidences (c) or the probabilities (P), the confidences (c) and the probabilities (P) are defined by a predetermined initial state of the system (14) or a system history; and
wherein a first path and a different second path through the Petri net have a same end point.

## Revendications

1. Dispositif (10; 20) de commande des actionneurs (12; 12a à e) d'un système (14) qui présente les actionneurs (12; 12a à e) et les capteurs (16a à f), aux caractéristiques suivantes:
un analyseur (22) destiné à analyser les signaux de sortie des capteurs (16; 16a à f) pour obtenir un résultat d'analyse;
un moyen d'interprétation (24) destiné à interpréter le résultat d'analyse pour obtenir à partir du résultat d'analyse une pluralité d'hypothèses d'interprétation différentes qui représentent différentes significations du résultat d'analyse, où le moyen d'interprétation (24) présente un réseau de Petri, où chaque hypothèse d'interprétation est une quantité de chemins possibles à travers le réseau de Petri et présente une combinaison de probabilités ou de confiances;
un moyen de commande de comportement (26) destiné à fournir une réaction présentant une signification pour exercer une influence recherchée du système sur la pluralité d'hypothèses d'interprétation différentes, où la signification est un point final d'un chemin à travers le réseau de Petri;
un articulateur (28) destiné à générer une articulation à partir de la signification de la réaction, où l'articulation comporte une séquence de caractères et où peuvent être générés, à partir de l'articulation, par synthèse des signaux de commande pour les actionneurs (12; 12a à e); et
un synthétiseur (32) destiné à synthétiser les signaux de commande pour les actionneurs (12; 12a à e) à partir de l'articulation et à sortir les signaux de commande synthétisés vers les actionneurs;
dans lequel le moyen d'interprétation (24) est conçu pour commencer la pluralité d'hypothèses d'interprétation différentes et pour continuer les hypothèses d'interprétation commencées à l'aide des confiances (c) ou des probabilités (P), les confiances (c) et les probabilités (P) étant définies par un état initial prédéterminé du système (14) ou un historique du système; et
dans lequel un premier chemin et un deuxième chemin différent à travers le réseau de Petri présentent le même point final.

2. Dispositif (10; 20) selon la revendication 1,
dans lequel à chaque hypothèse d'interprétation commencée est associée une mesure de confiance initiale ou une probabilité initiale.

3. Dispositif (10; 20) selon la revendication 1 ou 2,
dans lequel le moyen d'interprétation (24) est conçu pour continuer les hypothèses d'interprétation commencées à l'aide des confiances (c) et pour fournir une mesure de confiance de résultat pour chacune de la pluralité d'hypothèses d'interprétation différentes, et
dans lequel le moyen de commande de comportement (26) est conçu pour sélectionner l'hypothèse d'interprétation à la mesure de confiance la plus grande et pour déterminer les réactions sur cette base.

4. Dispositif selon l'une des revendications précédentes,
dans lequel le moyen de commande de comportement (26) est conçu pour déterminer, outre l'une réaction, au moins une autre réaction, aux réactions étant associées des probabilités ou des mesures de confiance différentes.

5. Dispositif selon l'une des revendications précédentes, dans lequel le moyen de commande de comportement (26) est conçu pour utiliser, lors de la détermination de la réaction, une stratégie prédéterminée ou influencée par un historique de système.

6. Dispositif (10; 20) selon l'une des revendications précédentes,
dans lequel le moyen d'interprétation (24) présente un convertisseur de signification d'expression,
dans lequel le résultat d'analyse est alimenté vers le convertisseur de signification d'expression et l'hypothèse d'interprétation est sortie du convertisseur de signification d'expression.

7. Dispositif (10; 20) selon l'une des revendications précédentes,
qui présente par ailleurs un processeur de modèle (42) et un processeur d'apprentissage (38), le processeur d'apprentissage (38) étant conçu pour être alimenté en signaux d'entrée par le moyen d'interprétation (24) ou le moyen de commande de comportement (26); et pour commander le modèle de processeur (42) en fonction des signaux d'entrée,
dans lequel le processeur de modèle (42) est conçu pour commander le moyen d'interprétation (24) ou l'articulateur (28) en fonction des signaux d'entrée du processeur d'apprentissage (38);
dans lequel le processeur d'apprentissage (38) est conçu pour commander un processeur de stratégie (44), dans lequel le processeur de stratégie (44) est conçu pour alimenter vers le moyen de commande de comportement (26) une stratégie de comportement en fonction des informations provenant du processeur d'apprentissage (38);
dans lequel est associée à chaque hypothèse d'interprétation commencée une mesure de confiance initiale ou une probabilité de sortie, et dans lequel le moyen de commande de comportement (26) est conçu pour modifier les confiances, les probabilités ou les probabilités de sortie sur base de la stratégie de comportement.

8. Dispositif (10; 20) selon l'une des revendications précédentes,
qui présente une mémoire d'état d'informations (36) qui est conçue pour mémoriser l'état d'informations du système (14) ou un état actuel du système (14);
dans lequel la mémoire d'état d'informations (36) est conçue pour agréger des hypothèses d'interprétation d'étapes passées pour obtenir un état d'informations.

9. Dispositif (10; 20) selon l'une des revendications 1 à 8,
dans lequel le système (14) est le matériau cognitif (18) avec des capteurs (16a à f) et des actionneurs (12; 12a à e),
dans lequel le moyen de commande de comportement (26) est conçu pour générer, dans une première étape, à partir du signal de capteur le diagnostic de l'état des possibilités de réaction et le renforcement de structure,
dans lequel le moyen de commande de comportement (26) est conçu pour déterminer, dans une deuxième étape qui suit la première étape, le diagnostic d'état de réaction;
dans lequel un synthétiseur (32) est conçu pour fournir, dans la deuxième étape, des signaux d'actionneur pour le diagnostic d'état;
dans lequel le moyen d'interprétation (24) est conçu pour interpréter, dans une troisième étape qui suit la deuxième étape, le résultat d'analyse d'un analyseur (22);
dans lequel le moyen de commande de comportement (26) est conçu pour déterminer, dans une quatrième étape qui suit la troisième étape, à partir de l'interprétation le renforcement de structure de réaction qui se rapporte à une adaptation d'une résistance ou d'une rigidité du matériau cognitif (18); et
dans lequel le synthétiseur (32) est conçu pour fournir les signaux d'actionneur pour le renforcement de structure.

10. Dispositif (10; 20) selon l'une des revendications précédentes,
dans lequel l'articulateur (28) présente un convertisseur d'expression de signification,
dans lequel la réaction est alimenté vers le convertisseur d'expression de signification et l'articulation est sortie du convertisseur d'expression de signification.

11. Dispositif (10; 20) selon l'une des revendications précédentes,
dans lequel l'articulateur (28) présente un rapport de valeurs de caractéristique pondéré (72) qui présente un noeud de racine d'articulation (74), une pluralité de niveaux hiérarchiques (78a à e), des noeuds (76a à f) et des bords entre un noeud (76a à f) d'un niveau supérieur (78a à d) et différents noeuds d'un niveau inférieur (78b à e),
dans lequel à chaque bord est associée une confiance (c) ou une probabilité (P), dans lequel le rapport de valeurs de caractéristique pondéré (72) présente une pluralité de noeuds de signification (68a; 68b) qui forment un niveau hiérarchique le plus bas (76f), et qui sont connectés au niveau hiérarchique immédiatement supérieur (76e) par des bords, où chaque noeud de signification (68a; 68b) représente la signification d'une hypothèse d'articulation;
dans lequel l'articulateur (28) est conçu pour calculer une mesure de confiance associée à une hypothèse d'articulation à partir d'une combinaison de mesures de confiance ou de probabilités qui sont associées à des bords entre le noeud de signification (68a, 68b) et le noeud de racine d'articulation (74).

12. Dispositif (10; 20) selon la revendication 9,
dans lequel l'articulateur (28) est conçu pour déterminer, à partir du diagnostic d'état de réaction déterminé par le moyen de commande de comportement (26) dans la deuxième étape, des signaux d'entrée pour le synthétiseur (32) et pour les fournir au synthétiseur (32); ou
dans lequel l'articulateur (28) est conçu pour déterminer, à partir du diagnostic d'état de réaction déterminé par le moyen de commande de comportement (26) dans la quatrième étape, des signaux d'entrée de renforcement de structure pour le synthétiseur (32) et pour les fournir au synthétiseur (32).

13. Dispositif (10; 20) selon l'une des revendications précédentes,
qui présente par ailleurs un processeur de modèle de structure (48) et un processeur d'apprentissage de modèle (46), où le processeur d'apprentissage de structure (46) est conçu pour être alimenté en signaux d'entrée par l'analyseur (22) ou l'articulateur (28); et pour commander le processeur de modèle de structure (48) en fonction des signaux d'entrée de sorte qu'ait lieu une adaptation d'un modèle de structure de l'analyseur (22) et du synthétiseur (32) pour compenser les modifications de structure du dispositif;
dans lequel le processeur de modèle de structure (48) est conçu pour commander l'analyseur (22) et le synthétiseur (32) en fonction des signaux d'entrée du processeur d'apprentissage de structure (46), dans lequel le synthétiseur est conçu pour utiliser le modèle de structure de l'articulation pour synthétiser les signaux de commande pour les actionneurs (12; 12a à e).

14. Système (14) aux caractéristiques suivantes:
une pluralité d'actionneurs (12; 12a à e) et une pluralité de capteurs (16; 16a à f), dans lequel
les actionneurs (12; 12a à e) et les capteurs (16; 16a à f) sont montés sur le système (14) de sorte qu'un actionnement d'actionneur à l'aide d'un signal d'actionneur provoque un signal de capteur détectable; et
un dispositif (10; 20) pour commander les actionneurs du système selon l'une des revendications 1 à 13.

15. Procédé de commande d'actionneurs (12; 12a à e) d'un système qui présente les actionneurs et les capteurs (16; 16a à f), aux étapes suivantes consistant à:
analyser les signaux de sortie des capteurs (16; 16a à f) pour obtenir un résultat d'analyse;
interpréter le résultat d'analyse pour obtenir à partir du résultat d'analyse une pluralité d'hypothèses d'interprétation différentes qui représentent différentes significations du résultat d'analyse, où chaque hypothèse d'interprétation est une quantité de chemins possibles à travers un réseau de Petri et présente une combinaison de probabilités ou de confiances;
fournir une réaction présentant une signification pour exercer une influence recherchée du système sur la pluralité d'hypothèses d'interprétation différentes, où la signification est un point final d'un chemin à travers le réseau de Petri;
générer une articulation qui comporte une séquence de caractères à partir de la signification de la réaction, où des signaux de commande pour les actionneurs (12; 12a à e) peuvent être générés à partir de l'articulation par synthèse;
synthétiser les signaux de commande pour les actionneurs (12; 12a à e) à partir de l'articulation; et
sortir les signaux de commande synthétisés vers les actionneurs;
dans lequel est commencée, à l'étape d'interprétation, la pluralité d'hypothèses d'interprétation différentes et sont continuées les hypothèses d'interprétation commencées à l'aide de confiances (c) ou de probabilités (P) et dans lequel les confiances (c) et les probabilités (P) sont définies par un état initial prédéterminé du système (14) ou un historique de système; et
dans lequel un premier chemin et un deuxième chemin différent à travers le réseau de Petri présentent le même point final.
